# EUROPEAN PATENT SPECIFICATION

(11) **EP 4 268 593 B1**
(45) Date of publication and mention of the grant of the patent: **23.09.2026**
(21) Application number: 23165892.3
(22) Date of filing: 31.03.2023
(51) Int. Cl.: A01M 7/00, B05B 5/043, B60K 17/10

(54) **SPRAY MACHINE CONTROL METHOD, SPRAY MACHINE CONTROL PROGRAM, AND SPRAY MACHINE**
STEUERVERFAHREN FÜR EINE SPRÜHMASCHINE, STEUERPROGRAMM FÜR EINE SPRÜHMASCHINE UND SPRÜHMASCHINE
PROCÉDÉ DE COMMANDE DE MACHINE DE PULVÉRISATION, PROGRAMME DE COMMANDE DE MACHINE DE PULVÉRISATION ET MACHINE DE PULVÉRISATION

(30) Priority: 27.04.2022 JP 2022072969
(43) Date of publication of application: 01.11.2023
(73) Proprietor: Yanmar Holdings Co., Ltd., Osaka-shi, Osaka (JP)
(72) Inventor: UENO, So, Okayama-shi (JP)
(74) Representative: Sekiguchi, Kazuya

(56) References cited:
- CN-A- 108 094 378
- JP-A- 2005 125 175
- US-A- 4 467 961
- US-A1- 2013 068 862

## Description

### TECHNICAL FIELD

The present invention relates to a control method for a spray machine capable of spraying a spray matter while running, a spray machine control program, and the spray machine.

### BACKGROUND ART

As a related technology, there is known a spray machine (agricultural vehicle) provided with a run unit (crawler) including a pair of crawlers arranged in the right and left direction, a machine body (left vehicle body and right vehicle body), an engine, and a spray nozzle (chemical jet unit) (see, for example, Patent Document 1). In the spray machine according to the related art, the pair of crawlers of the run unit runs so that a plant, which is a spray target, is sandwiched therebetween in the right and left direction. The left vehicle body in the machine body is supported mainly by the left crawler. The right vehicle body in the machine body is supported mainly by the right crawler. The engine is placed on the left vehicle body side.

In the spray machine according to the related art, the spray nozzle is provided on each of the right and left vehicle bodies. Each of the spray nozzle sprays a chemical on both the right and left sides. As a result, the spray machine according to the related art can simultaneously spray the chemical on a plant passing between the right and left pair of crawlers, a plant positioned on the left side of the spray machine, and a plant positioned on the right side of the spray machine. This spray machine is capable of spraying the chemical on the plant while automatically running (autonomous running) based on the current position and autonomous run route. Further, Patent Document 2 discloses an agricultural chemical sprayer using special pre-coded machine readable chemical containers. Patent Document 3 discloses an electrostatic spraying device comprising a spraying rod body, an electrostatic generator, an extractor and at least sprayer, and Patent Document 4 discloses an electrostatic sprayer constituted so as to apply high voltage across the spray nozzle.

### PRIOR ART DOCUMENT

### PATENT DOCUMENT

Patent Document 1: Japanese Unexamined Patent Application Publication No. 2020-152285
Patent Document 2: US 4467961 A
Patent Document 3 : CN 108094378 A
Patent Document 4 : JP 2005-125175 A

### SUMMARY OF INVENTION

### TECHNICAL PROBLEM

In the above related technology, providing an electrostatic charge device that applies a high voltage to a load, which includes an electrode, thereby to charge a spray matter (chemical solution) causes a possibility that an operator or the like may erroneously touch the electrode (load) to which the high voltage is applied.

An object of the present invention is to provide a spray machine control method, a spray machine control program, and a spray machine that make it easy to prevent an operator or the like from erroneously touching an electrode to which a high voltage is applied.

### SOLUTION TO PROBLEM

A method of controlling a spray machine according to one aspect of the p resent invention is provided with a machine body capable of running, a spray nozzle that is supported to the machine body and sprays a liquid spray matter, and an electrostatic charge device. The electrostatic charge device applies a voltage to a load, which includes an electrode, thereby to charge the spray matter sprayed from the spray nozzle The method has: acquiring an actuated state of the machine body; and controlling, according to the actuated state of the machine body, the electrostatic charge device in a manner to change a state of applying the voltage to the load.

A spray machine control program according to one aspect of the present invention is for causing one or more processors to execute the control method of the spray machine.

A spray machine according to one aspect of the present invention includes: a machine body capable of running; a spray nozzle; an electrostatic charge device; an acquisition process unit; and an electrostatic charge process unit. The spray nozzle is supported to the machine body and sprays a liquid spray matter. The electrostatic charge device applies a voltage to a load, which includes an electrode, thereby to charge the spray matter sprayed from the spray nozzle The acquisition process unit acquires an actuated state of the machine body. The electrostatic charge process unit, according to the actuated state of the machine body, controls the electrostatic charge device in a manner to change a state of applying the voltage to the load.

### ADVANTAGEOUS EFFECTS OF INVENTION

The present invention can provide a spray machine control method, a spray machine control program, and a spray machine that make it easy to prevent an operator or the like from erroneously touching an electrode to which a high voltage is applied.

### BRIEF DESCRIPTION OF DRAWINGS

Fig. 1 is an external view of a spray machine according to a first embodiment when viewed from the front left side.
Fig. 2 is an external view of a back face of the spray machine according to the first embodiment when viewed from the back side.
Fig. 3 shows an example of a crop row for which the spray machine according to the first embodiment is used.
Fig. 4 is a schematic view showing an overall configuration of an automatic run system using the spray machine according to the first embodiment.
Fig. 5 is a schematic block diagram showing the configuration of the spray machine according to the first embodiment.
Fig. 6 is an external view of the left lateral side of the spray machine according to the first embodiment when viewed from the left side.
Fig. 7 is an external view of the right lateral side of the spray machine according to the first embodiment when viewed from the right side.
Fig. 8 is an external view of an upper side of the spray machine according to the first embodiment when viewed from above.
Fig. 9 is an external view of a back side of the spray machine according to the first embodiment when viewed from the back side.
Fig. 10 is a schematic view showing the spray machine according to the first embodiment when viewed from diagonally behind.
Fig. 11 is an illustration schematically showing the configuration of a spray device of the spray machine according to the first embodiment.
Fig. 12 is an illustration schematically showing the configuration of an electrostatic charge device of the spray machine according to the first embodiment.
Fig. 13 is an illustration showing an example of a target route for the automatic run of the spray machine according to the first embodiment.
Fig. 14 is a flowchart showing an example of the spray machine control method according to the first embodiment, especially an electrostatic charge process.

### DESCRIPTION OF EMBODIMENTS

Embodiments of the present invention will be described below with reference to the accompanying drawings. The following embodiments are each an embodied example of the present invention.

### (First Embodiment)

### [1] Overall Configuration

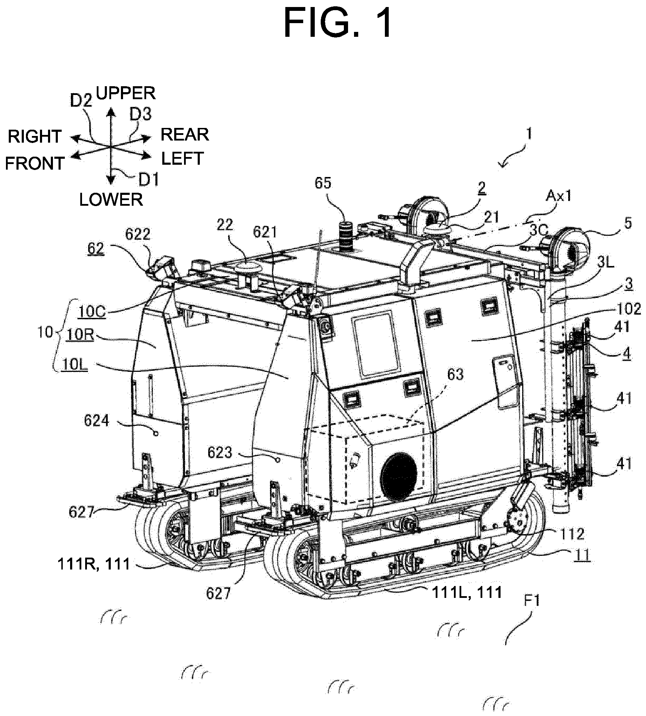

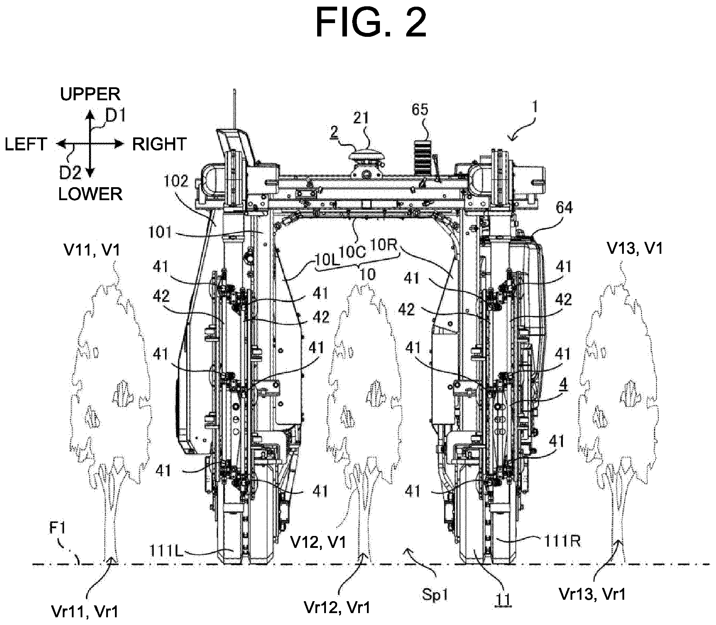

First, the overall configuration of a spray machine 1 according to the present embodiment will be described with reference to Figs. 1 to 4. **In** the present embodiment; to a crop V1 (see Fig. 2) being grown in a farm field F1, the spray machine 1, performs spray work of spraying a spray matter such as chemical solution, water, fertilizer and the like, for example. This spray machine 1 is an example of a "spray machine" that performs various types of work in a work target area such as the farm field F1.

That is, the spray machine 1 is a work machine that can perform, as work, spray work of spraying the spray matter such as chemical solution, water, fertilizer and the like. The "work machine" referred to in the present disclosure includes, for example, work vehicles such as tractors, rice planters, spray machines, seeders, transplanters, and combine harvesters, in addition to the spray machine. That is, the work machines include the work vehicle. The work machine is not limited to a "vehicle" but may be, for example, a flying work vehicle such as a drone, a multi-copter or the like for spraying chemical solution, water, fertilizer or the like..

The "farm field" referred to in the present disclosure is an example of the work target area where the spray machine 1, which is the work machine, performs various types of work such as spraying, for example, while moving, and includes orchards, pastures, rice fields, and fields where agricultural products are grown. In this case, the crop V1 grown in the farm field F1 is an agricultural product. Further, when garden plants are grown in the plant field, the plant field becomes the farm field F1, and when trees to be used as timber are grown in a forest, as in forestry, the forest becomes the farm field F1. In this case, the crop V1 grown in the farm field F1 is a garden plant, a tree and the like. However, the work target area where the work machine performs works is not limited to the farm field F1, but may be any area other than the farm field F1. For example, when the work machine is a construction machine, the work target area is a site where the construction machine works.

In the present embodiment, as an example, the spray machine 1 is assumed to be a vehicle that, while moving in the farm field F1 as an orchard such as a vineyard or an apple orchard, sprays a chemical solution to the crop V1 grown in the farm field F1. In this case, the chemical solution is an example of the spray matter. Further, the crop V1 is an example of a spray target to which the spray matter (chemical solution) is sprayed, such as a grape tree. The crop V1, which is the spray target, is also an example of a target of the work to be performed by the spray machine 1 as the work machine. The "chemical solution" referred to as the spray matter here is agricultural chemicals used for higher efficiency of agriculture or preservation of agricultural products, and include herbicides, fungicides, mold inhibitors, insecticides, herbicides, rodenticides, and the crop V1's growth promoters and germination inhibitors.

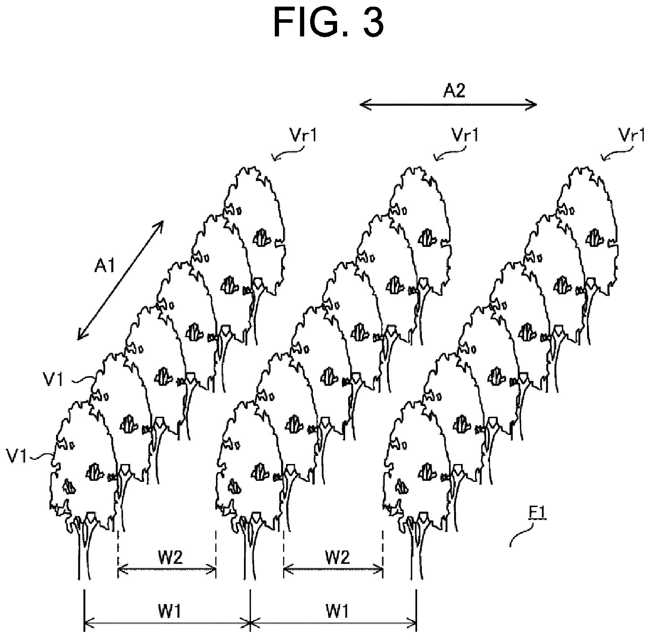

The crops V1 are placed in multiple rows at given intervals in the farm field F1. Specifically, as shown in Fig. 3, multiple crops V1 are planted in a manner to be linearly arranged in a longitudinal direction A1 in a plan view. The multiple crops V1 linearly arranged in the longitudinal direction A1 constitute a crop row Vr1. Fig. 3 exemplifies three crop rows Vr1, each including six crops V1 arranged in the longitudinal direction A1. Each of the crop rows Vr1 is placed at a given pitch W1 in a width direction A2. As a result, a work route that has a width W2 (< W1), which corresponds to the interval between the crop rows Vr1, and that extends along the longitudinal direction A1 is formed between the adjacent crop rows Vr1. The spray machine 1, while moving (running) in the longitudinal direction A1 through this work route, sprays the spray matter (chemical solution) to the crop V1.

Though to be described in detail below, the spray machine 1 running in the farm field F1 includes a gate-shaped machine body 10. That is, the machine body 10 has a first block 10L and a second block 10R which are placed side by side in a right and left direction D2, and a connecting portion 10C which connects upper end portions of the first block 10L and second block 10R to each other. As a result, the machine body 10, with the first block 10L, the second block 10R and the connecting portion 10C, constitutes a gate shape surrounding three sides, that is, left, right, and upper sides of a space Sp1. That is, the space Sp1 open to a front/back direction D3 is formed inside the machine body 10.

Further, the spray machine 1 is provided with a run unit 11 that includes a pair of crawlers 111L, 111R arranged in the right and left direction D2. The pair of crawlers 111L and 111R are provided below the first and second blocks 10L and 10R, respectively, and are positioned on both sides of the right and left direction D2 with respect to the space Sp1.

As shown in Fig. 2, the spray machine 1, while running in an attitude of straddling the one crop row Vr1 with the gate-shaped machine body 10, can spray the spray matter (chemical solution) to the crop V1 in the crop row Vr1 and the crop V1 in the crop row Vr1 adjacent to this crop row Vr1. In other words, the spray machine 1 can run in a manner to pass the crop V1, which is the spray target (work target), through the space Sp1 inside the gate-shaped machine body 10. That is, as shown in Fig. 2, when three crop rows Vr11, Vr12, and Vr13 arranged in the right and left direction D2 are present, the spray machine 1 can run with the machine body 10 straddling the optional work row Vr1 of these three crop rows Vr11, Vr12, and Vr13.

Here, when the machine body 10 straddles the center crop row Vr12, the first block 10L runs on the work route between the left-end crop row Vr11 and the crop row Vr12, and the second block 10R runs on the work route between the right-end crop row Vr13 and the crop row Vr12. Then, the spray machine 1 can simultaneously spray the spray matter (chemical solution) to the crop V11 in the crop row Vr11, the crop V12 in the crop row Vr12, and the crop V13 in the crop row Vr13. As described above, the spray machine 1 according to the present embodiment can simultaneously spray the spray matter (chemical solution) to the spray targets (crops V1) in three rows during running, and thus, the spray work is more efficient as compared with a configuration of spraying row by row.

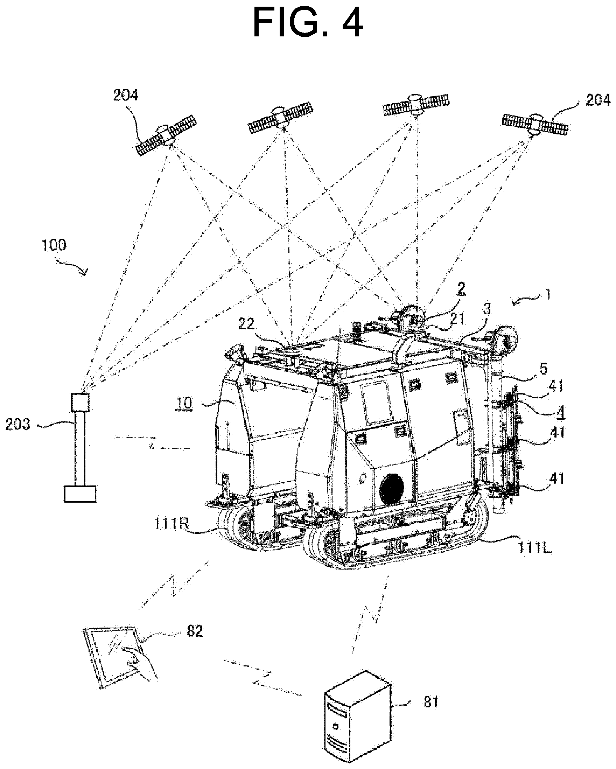

Further, in the present embodiment, as an example, the spray machine 1 is an unmanned machine that is actuated by an automatic driving, not by a human (operator) operation (including a remote control). Thus, as shown in Fig. 4, the spray machine 1 constitutes a spray control system 100 together with a server 81, a user terminal 82, a base station 203, a satellite 204, and the like. In other words, the spray control system 100 includes the spray machine 1, the server 81, the user terminal 82, the base station 203, and the satellite 204. However, at least one of the server 81, the user terminal 82, the base station 203, and the satellite 204 does not have to be included in the component elements of the spray control system 100; for example, the spray control system 100 does not have to include the satellite 204.

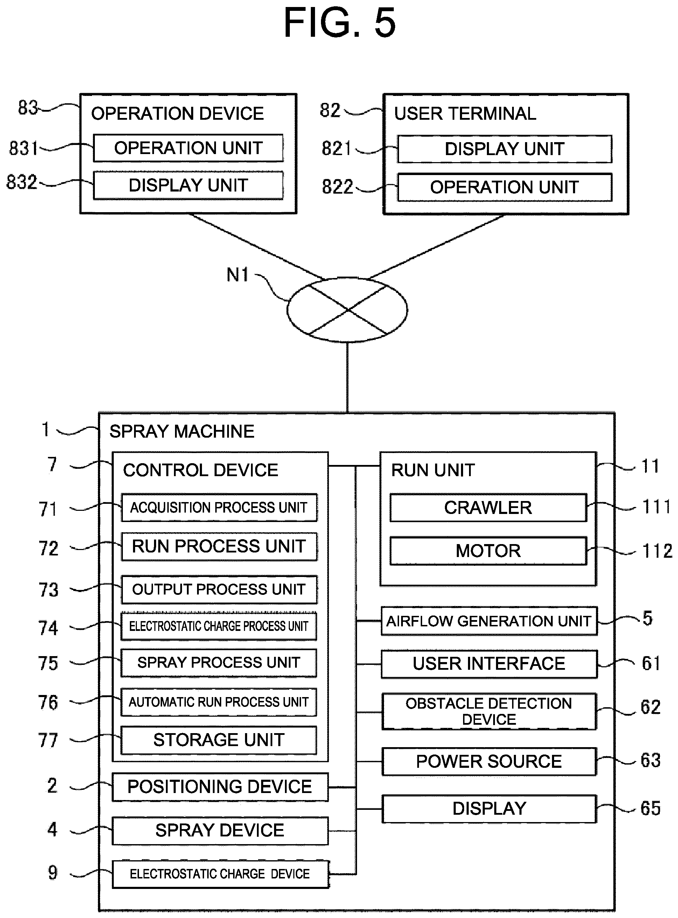

The spray machine 1, the server 81, and the user terminal 82 are communicatable with each other. The term "communicatable" referred to in the present disclosure means that information can be sent and received directly, or indirectly via a communication network N1 (see Fig. 5), a relay or the like, by a proper wired or wireless (radio wave medium or optical medium) communication method. For example, the spray machine 1 and the user terminal 82 are communicatable via the communication network N1 such as the Internet, a LAN (Local Area Network), a WAN (Wide Area Network), a public telephone network, a mobile telephone network, a packet network, a wireless LAN or the like. Further, each of the spray machine 1 and the user terminal 82 is communicatable also with the server 81 via the communication network N1 such as the Internet.

The satellite 204 is a positioning satellite constituting a satellite positioning system such as GNSS (Global Navigation Satellite System) or the like and sends a GNSS signal (satellite signal). The base station 203 is a reference point (reference station) that constitutes the satellite positioning system. To the spray machine 1, the base station 203 sends correction information for calculating a current position and the like of the spray machine 1.

The spray machine 1 according to the present embodiment includes a positioning device 2 that detects the current position (latitude, longitude, altitude and the like), the current azimuth and the like of the machine body 10. The positioning device 2 uses the GNSS signal sent from the satellite 204, thereby to execute a positioning process to identify (calculate) the current position, current azimuth and the like of the machine body 10. The positioning device 2 employs, for example, a high accuracy positioning method such as RTK (Real Time Kinematic) positioning which executes the positioning based on positioning information (GNSS signal and the like) received by two receivers (the base station 203 and the antenna 21) and the correction information generated at the base station 203.

The user terminal 82 is an information process device such as a tablet terminal and a smartphone. The user terminal 82 has a display unit 821 (see Fig. 5) and an operation unit 822 (see Fig. 5).

Here, the user using the user terminal 82 may or may not be the same person as the operator operating (driving) the spray machine 1. Further, concerning the user using the user terminal 82, a single user may be set up for one farm field F1, such as the owner of farm field F1, or multiple users may be set up for one farm field F1, for example. In the latter case; even for one farm field F1, for example, it is possible to set a different user for each work. Further, the user may be either an individual or a corporation, or a group (organization) including a collection of multiple individuals or corporations. There may be one user terminal 82 for one user, one user terminal 82 for multiple users, or multiple user terminals 82 for one user. When one user terminal 82 is provided for multiple users, each of the multiple users can be identified by a user ID, for example.

The display unit 821 is a user interface, which is for presenting information to the user (operator), such as a liquid crystal display or organic EL display that displays various types of information. The display unit 821, by display, presents various types of information to the user. In particular, in the present embodiment, the user terminal 82 has a browser function, and the display unit 821 can display information such as various web pages.

The operation unit 822 is a user interface, such as a mouse or a keyboard, for receiving an operation input by the user. The operation unit 822 outputs an electric signal that accords to the operation by the user, for example, thereby to receive various operations by the user. In particular, in the present embodiment, the user terminal 82 has a browser function, and the operation unit 822 can receive various operations on the web page displayed on display unit 821.

The operator, on the operation screen displayed on the display unit 821, operates the operation unit 822, making it possible to execute an operation to register the various types of information. Further, the operator operates the operation unit 822, making it possible to give a work start instruction, a run stop instruction and the like to the spray machine 1. In addition to the configuration described above, the user terminal 82 is further provided with a communication unit, a storage unit, and a processor.

The server 81 is an information process device such as a server device. To the spray machine 1, the server 81 sends information such as a target route or the like for the automatic run of the spray machine 1.

Further, the spray machine 1 can automatically (autonomously) run along the preset target route. For example, the spray machine 1, from a work start position to a work end position, automatically runs along the target route that includes multiple work routes and transfer routes. The multiple work routes are each a linear route along which the spray machine 1 performs the work (spray work) on the crop V1 which is the work target (spray target), and the transfer route is a route along which the spray machine 1 runs between the crop rows Vr1 without performing the spray work and which may include a turn route and a linear route.

Further, the spray machine 1 automatically runs in a given row order. In the example in Fig. 2, the spray machine 1 runs by straddling the crop row Vr11, then straddling the crop row Vr12, and then straddling the crop row Vr13. In this way, the spray machine 1 performs the automatic run according to a preset order of the crop rows Vr1. The spray machine 1 may run one row in the order in which the crop rows Vr1 are arranged, or may run every plural rows.

Further, in the present embodiment; for convenience of description, a vertical direction in a state where the spray machine 1 is usable is defined as an up and down direction D1, as shown in Fig. 1. Further, the right and left direction D2 and the front/back direction D3 each are defined with reference to the direction viewed from a center point of the spray machine 1 in plan view. That is, the spray machine 1's forward direction seen when the spray machine 1 is moving forward is a front in the front/back direction D3, and the spray machine 1's forward direction seen when the spray machine 1 is moving back is a rear in the front/back direction D3. However, these directions are not intended to limit a use direction (direction in use) of the spray machine 1.

Further, the term "parallel" referred to in the present disclosure means, in addition to the case where two straight lines on one plane do not intersect no matter how far they are extended, that is, where the angle between the two is strictly 0 degrees (or 180 degrees), a case where the angle between the two has a relation within an error range of about several degrees (less than 10 degrees, for example) relative to 0 degree. Similarly, the term "orthogonal" referred to in the present disclosure means, in addition to the case where the angle between the two is exactly 90 degrees, a relation that the angle between the two is within an error range of about several degrees (less than 10 degrees, for example) relative to 90 degrees.

### [2] Details of Spray Machine

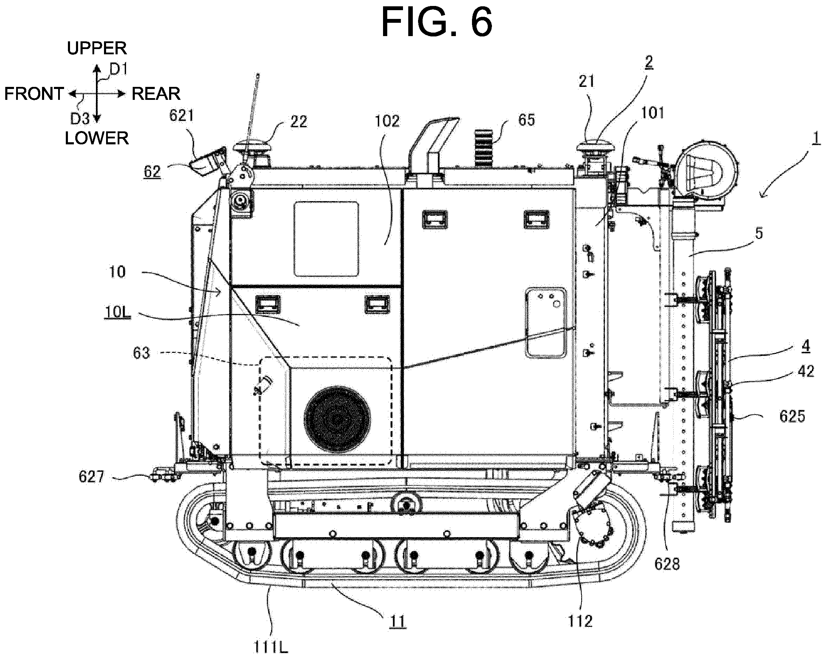

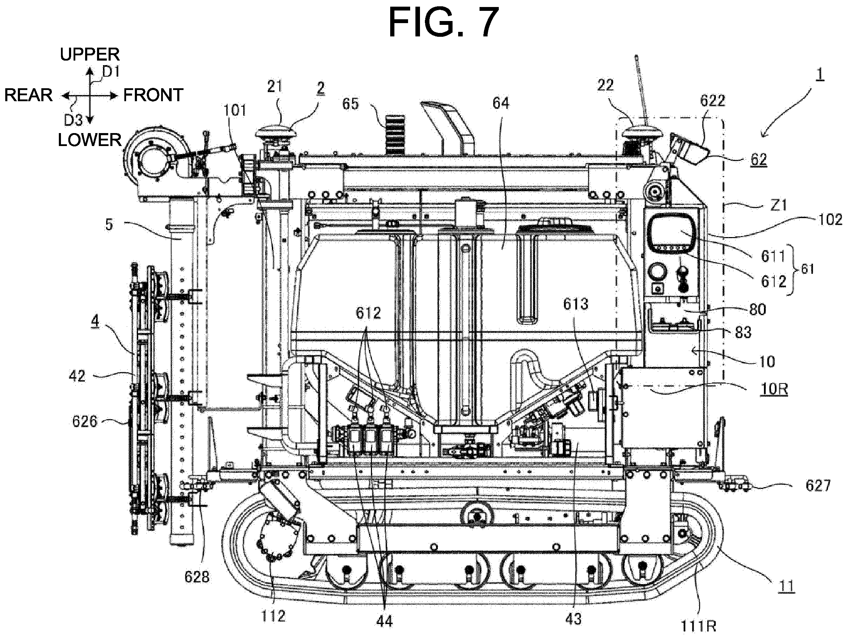

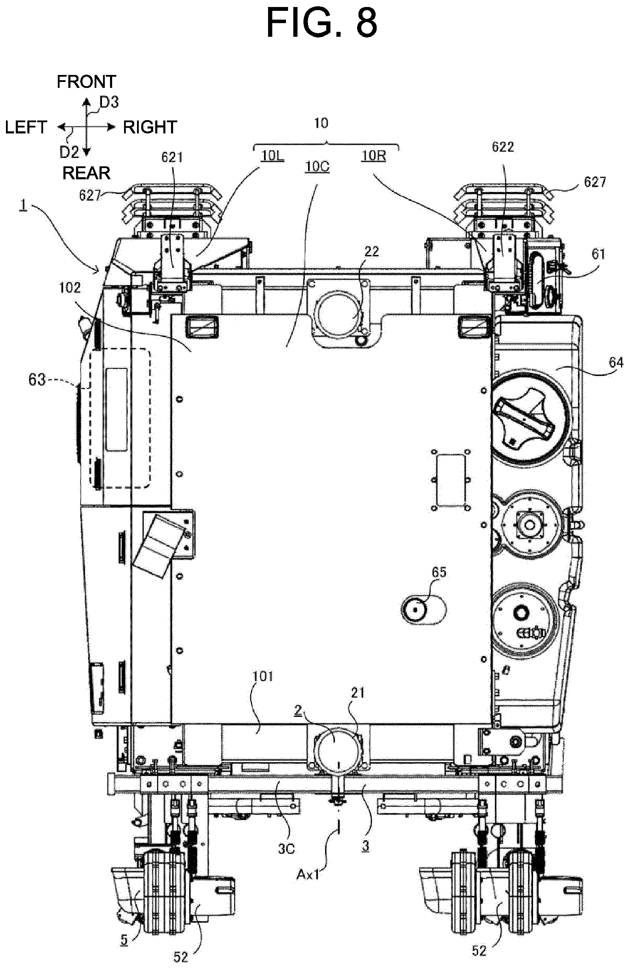

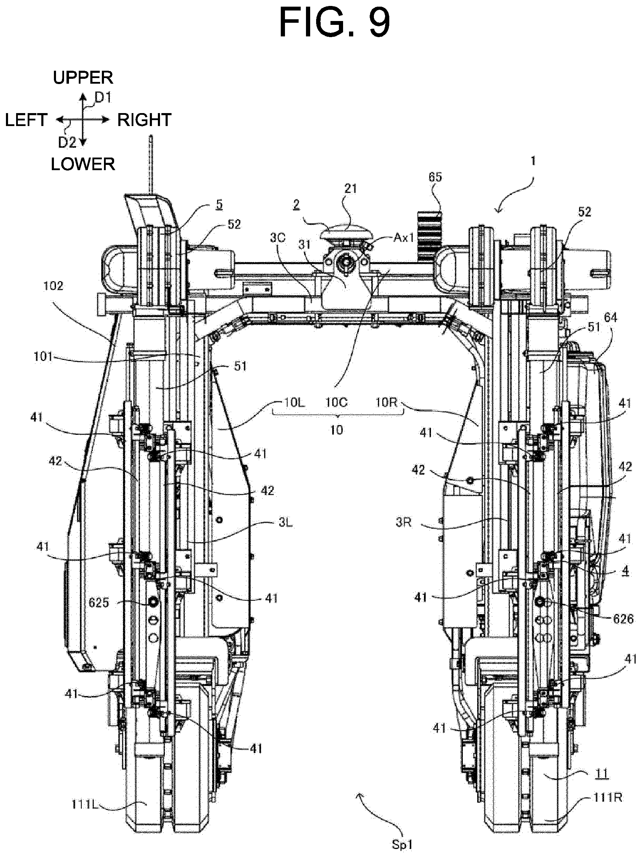

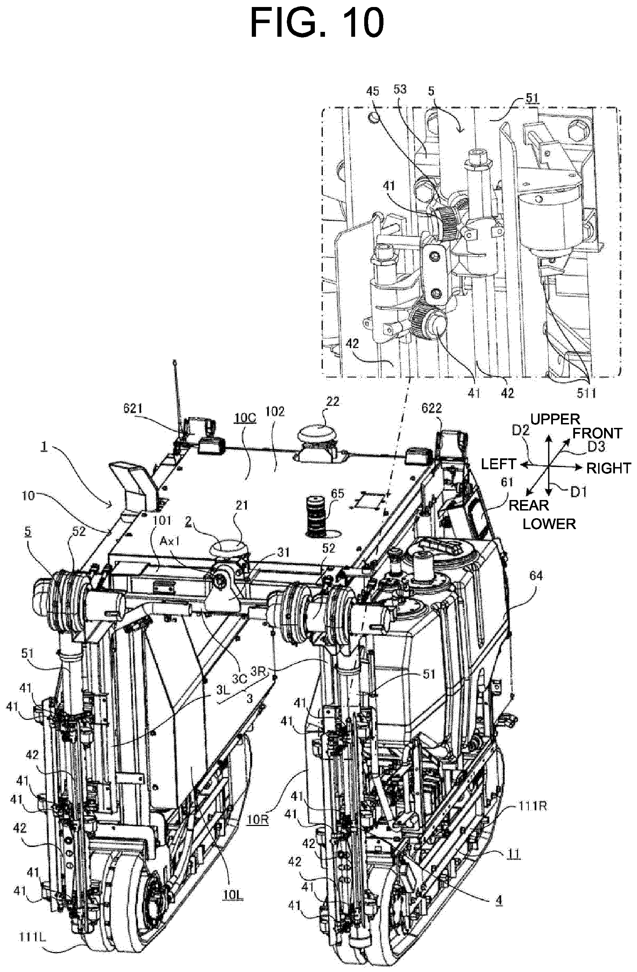

Next, the configuration of the spray machine 1 will be described in more detail with reference to Figs. 1, 2, 5 to 10. Fig. 1 is an external view of the spray machine 1 when viewed from the front left side, and Fig. 2 is an external view of the back face of the spray machine 1 when viewed from the back face side. Fig. 5 is a schematic block diagram showing the main configuration of the spray machine 1. Fig. 6 is an external view of the left lateral side of the spray machine 1 when viewed from the left side, Fig. 7 is an external view of the right lateral side of the spray machine 1 when viewed from the right side, and Fig. 8 is an external view of an upper side of the spray machine 1 when viewed from above. Fig. 9 is an external view of the back side of the spray machine 1, viewed from the back side. Fig. 10 is a schematic view showing the spray machine 1 when viewed from diagonally behind, with a partially enlarged view shown within the balloon.

The spray machine 1 includes the machine body 10, the run unit 11, the support frame 3, and a spray device 4. In the present embodiment, as shown in Fig. 5, the spray machine 1 further includes an electrostatic charge device 9, a positioning device 2, a control device 7, an airflow generation unit 5, a user interface 61, an obstacle detection device 62, a power source 63, a tank 64 (see Fig. 7), a display 65, and the like. Further, the spray machine 1 further includes a communication terminal, a fuel tank, a battery and the like. In the present embodiment, the spray machine 1's structures including the machine body 10, the support frame 3 and the like are basically made of metal, and the material is selected according to required strength, weather resistance and the like. However, the structure of the spray machine 1 is not limited to being made of metal, but resin, wood or the like, for example, may be used as appropriate.

The machine body 10 is the main body of the spray machine 1, and supports most of the spray machine 1's component elements including the positioning device 2, and the support frame 3 and the like. The machine body 10 has a frame 101 (see Fig. 2) and a cover 102. The frame 101 is a member that constitutes the framework of the machine body 10, and supports heavy objects such as the power source 63, the tank 64 and the like. The cover 102 is a member that constitutes an outline of the machine body 10, and is so mounted to the frame 101 as to cover at least part of the frame 101 and part of a member mounted to the frame 101. In a part of the back face and of the right lateral face of the machine body 10, the frame 101 is not covered with the cover 102, thus exposing the frame 101. The cover 102 is divided into multiple parts, and these multiple parts are so configured as to be individually removable from the frame 101. Thus, regarding the cover 102, only a part corresponding to some devices (members) such as the power source 63, for example, is removable, making it possible to expose the some devices (members) such as the power source 63.

The machine body 10 has the first block 10L and the second block 10R which are placed side by side in the right and left direction D2, as described above. In the right and left direction D2, the first block 10L and the second block 10R are opposed to each other at an interval of a certain value or more. In the present embodiment, as an example, the first block 10L is positioned on the left side and the second block 10R is positioned on the right side. Thus, the left side part of the machine body 10 includes the first block 10L, and the right side part of the machine body 10 includes the second block 10R. Further, the machine body 10 has a connecting portion 10C which connects the first block 10L with the second block 10R. In a front view (viewed from the front), the connecting portion 10C has a length along the right and left direction D2, and the first block 10L and the second block 10R have lengths along the up and down direction D1, respectively.

Here, the connecting portion 10C connects the upper end portions of the first block 10L and the second block 10R to each other, in other words, the first block 10L and the second block 10R protrude downward from both end portions (in the right and left direction D2) of the connecting portion 10C, respectively. As a result, the machine body 10, by the first block 10L, the second block 10R and the connecting portion 10C, constitutes a gate-shape that is open downward in addition to both sides in the front/back direction D3. And, inside the machine body 10, there is formed the space Sp1 that has three sides thereof surrounded by the first block 10L, the second block 10R, and the connecting portion 10C, and that is open to the front/back direction D3.

In short, between the first block 10L and the second block 10R, the machine body 10 forms the space Sp1 through which the crop V1 (work target) to be a target of the work (spray work) by the spray device 4 (work unit) is passed, as shown in Fig. 2. Specifically, dimensions of each part of the machine body 10 are so set as to form the space Sp1 with a height and a width equal to or larger than a standard size of the crop V1 as the spray target. Thus, in the case of the crop V1 with the standard size, the machine body 10, in a state straddling the crop V1, allows the crop V1 to pass through the space Sp1 at an open interval of a given value or more so that the crop V1 does not contact the machine body 10. During the crop V1 passing through the space Sp1, the first block 10L is positioned on the left of the crop V1, the second block 10R is positioned on the right of the crop V1, and the connecting portion 10C is positioned above the crop V1.

More specifically, in the present embodiment, the machine body 10 is constituted substantially symmetrically in the right and left direction D2. The first block 10L and the second block 10R are formed having substantially the same size and the same rectangular shape in side view. The first block 10L and the second block 10R have flat shapes in the right and left direction D2, such that a dimension in the right and left direction D2 is the smallest among the up and down direction D1, the right and left direction D2, and the front/back direction D3, respectively. Further, the first block 10L and the second block 10R are formed such that the parts above the center part in the up and down direction D1 are tapered, respectively, with the dimensions in the right and left direction D2 getting smaller as getting closer to upper ends. The connecting portion 10C, in plan view, is formed to be a rectangular shape such that the dimension is larger in the front/back direction D3 than in the right and left direction D2. The connecting portion 10C has a flat shape in the up and down direction D1, such that the dimensions in the up and down direction D1 are the smallest among the up and down direction D1, the right and left direction D2, and the front/back direction D3.

As described above, the machine body 10 can be roughly divided into three parts (blocks), that is, the first block 10L, the second block 10R, and the connecting portion 10C. Then, each of the first block 10L, the second block 10R and the connecting portion 10C has the frame 101 and the cover 102. In other words, each of the first block 10L and the second block 10R has the frame 101 and the cover 102. Further, most of the component elements of the spray machine 1, such as the positioning device 2 and the support frame 3, are provided in a distributed manner in the first block 10L, the second block 10R, and the connecting portion 10C.

The run unit 11 is a run device (vehicle body) that causes the spray machine 1 to run, and is provided in a lower portion of the machine body 10. The machine body 10 runs (including turning) on the ground by the run unit 11, thereby making it possible to move in the right and left direction D2 and the front/back direction D3 in the farm field F1. The above run unit 11 is provided on the machine body 10, thereby making it possible for the spray machine 1 to perform the work (spray work) while moving in the farm field F1.

The run unit 11 includes a pair of crawlers (crawler tracks) 111L, 111R arranged in the right and left direction D2. The pair of crawlers 111L, 111R are so placed as to be spaced apart by a certain interval in the right and left direction D2, and a space Sp1 is formed between these pair of crawlers 111L, 111R for passing the crop V1 as the spray target. That is, the left crawler 111L positioned on the left side of the space Sp1, and the right crawler 111R positioned on the right side of the space Sp1 face each other across the space Sp1. When the left crawler 111L and the right crawler 111R are not specifically distinguished, each crawler 111L, 111R is also simply referred to as "crawler 111". Further, the run unit 11 includes a motor 112 that drives the crawler 111. That is, the run unit 11 is a crawler-type (infinite track type) run device that drives the endless strip-shaped crawlers 111 with a motor 112, thereby to cause the spray machine 1 to run.

Here, at least two motors 112 are provided corresponding to a pair of crawlers 111L, 111R. The left side motor 112 which drives the left crawler 111L, and the right side motor 112 which drives the right crawler 111R can separately drive the crawler 111. In the present embodiment, as an example, the motor 112 is a hydraulic motor (hydraulic actuator), and, with hydraulic oil supplied from a hydraulic pump, drives the crawler 111. According to the above configuration, the machine body 10 can run relatively stably even when the road surface condition in the farm field F1 is rough.

Here, the crawler 111 and the motor 112 are provided below each of the first block 10L and the second block 10R. That is, the first block 10L has a left crawler 111L and a motor 112 that drives the left crawler 111L, and the second block 10R has a right crawler 111R and a motor 112 that drives the right crawler 111R. In the present embodiment, the pair of crawlers 111L, 111R and the pair of motors 112 are substantially symmetrical in the right and left direction D2. As described above, the pair of run units 11 are placed spaced apart in the right and left direction D2 by a portion of the space Sp1, thereby making it possible for the spray machine 1 to run with a relatively stable attitude on various road surface conditions of the farm field F1, including horizontally inclined slopes where either side in the right and left direction D2 is lower than the other.

Here, the pair of crawlers 111L and 111R, in a state where independent speed change is possible by a hydrostatic continuously variable transmission, is driven by power from the power source 63. Thus, the machine body 10, when the pair of crawlers 111L and 111R are driven to run straight forward at an equal speed, is put in a forward run state for linearly moving in the forward direction, and, when the pair of crawlers 111L and 111R are driven to run straight backward at an equal speed, is put in a backward run state for linearly moving in the backward direction. Also, the machine body 10, when the pair of crawlers 111L and 111R are driven to run backward at an uneven speed, is put in a forward turn state for turning in the forward direction, and, when the pair of crawlers 111L and 111R are driven to run backward at an uneven speed, is put in a backward turn state turning in the backward direction. Further, the machine body 10, when any one of the pair of crawlers 111L and 111R is stopped from driving and another thereof is driven, is put in a pivot turn state, and, when the pair of crawlers 111L and 111R are driven at the equal speed in the forward and backward directions, is put in a spin turn state (super pivot turn state). Further, the machine body 10, when the driving of the pair of crawlers 111L and 111R is stopped, is put in a run stop state.

The power source 63 and the like are mounted to the first block 10L, and the tank 64 and the like are mounted to the second block 10R. As described above, placing the components of the spray machine 1 on the first block 10L and second block 10R of the machine body 10 in a distributed manner balances the spray machine 1 in the right and left direction D2 and lowers a center of gravity of the spray machine 1. As a result, the spray machine 1 can run stably on a slope and the like in the farm field F1.

The positioning device 2 is a device that detects the current position and the current azimuth and the like of the machine body 10, as described above. The positioning device 2 has at least an antenna 21. The antenna 21 receives a GNSS signal and the like sent from the satellite 204. That is, the antenna 21 includes a position identifying antenna for identifying a machine body 10's position. Here, the antenna 21 is placed on an upper face (top face) of the machine body 10 so that the signal (GNSS signal) from the satellite 204 can be easily received. That is, the antenna 21 is placed at a position further higher than the highest machine body 10's position. Further, the positioning device 2 includes an attitude detecting unit and the like that detect the attitude of the machine body 10.

In the present embodiment, the positioning device 2 further has an antenna 22, which is a second antenna, separately from the antenna 21, which is a first antenna. The positioning device 2 receives the GNSS signal and the like by each of these two antennas 21, 22. Here, the antenna 22 (second antenna) is so placed as to be arranged relative to the antenna 21 (first antenna) in the front/back direction D3. As a result, the positioning device 2 is capable of sending and receiving the signals (GNSS signal and the like) by each of the antennas 21, 22. In particular, when the antennas 21, 22 are position identifying antennas, the current position can be identified at the front and rear portions of the machine body 10, respectively, and thus, the direction (current azimuth) of the machine body 10 can be also identified.

The support frame 3 is a member which is mounted to one end portion in the front/back direction D3 of the machine body 10 and which supports a spray nozzle 41 of the spray device 4, which will be described below. In the present embodiment, the support frame 3 is mounted to a rear end portion of the machine body 10. The support frame 3 has a gate shape similarly to the machine body 10, and, in a rear view (viewed from behind), is placed at a position overlapping the machine body 10. That is, the support frame 3 has a longitudinal frame 3L (first longitudinal frame) and a longitudinal frame 3R (second longitudinal frame) which are placed side by side in the right and left direction D2, and a transverse frame 3C which connects the upper end portions of the longitudinal frame 3L and the longitudinal frame 3R to each other. As a result, the support frame 3 constitutes a gate shape surrounding three sides, that is, left, right, and upper sides of the space Sp1 by the longitudinal frame 3L, the longitudinal frame 3R, and the transverse frame 3C.

Specifically, the support frame 3 has the longitudinal frame 3L and the longitudinal frame 3R which are placed side by side in the right and left direction D2. The longitudinal frame 3L and the longitudinal frame 3R are opposed to each other in the right and left direction D2 in a state at an interval of a certain value or more. In the present embodiment, as an example, the longitudinal frame 3L is positioned on the left side and the longitudinal frame 3R is positioned on the right side. Thus, the longitudinal frame 3L is positioned behind the first block 10L of the machine body 10, and the longitudinal frame 3R is positioned behind the second block 10R of the machine body 10. And, in the rear view (viewed from behind), the transverse frame 3C has a length along the right and left direction D2, and the longitudinal frame 3L and the longitudinal frame 3R have a length along the up and down direction D1, respectively.

Here, the transverse frame 3C connects the upper end portions of the longitudinal frame 3L and the longitudinal frame 3R to each other; thus, in other words, the longitudinal frame 3L and the longitudinal frame 3R protrude downward from both end portions (in the right and left direction D2) of the transverse frame 3C, respectively. As described above, the support frame 3 includes the transverse frame 3C having a length along the right and left direction D2, and the pair of longitudinal frames 3L, 3R having lengths along the up and down direction D1, respectively, and protruding downward from the both end portions of the transverse frame 3C. As a result, the support frame 3, by the longitudinal frame 3L, the longitudinal frame 3R, and the transverse frame 3C, constitutes a gate shape open downward in addition to the both sides in the front/back direction D3. And, inside the support frame 3, there is formed the space Sp1 surrounded on three sides by the longitudinal frame 3L, the longitudinal frame 3R and the transverse frame 3C and open to the front/back direction D3.

In short, as shown in Fig. 2, the support frame 3 forms the space Sp1, through which the crop V1 (work target, spray target) to be a target of the work (spray work) by the spray device 4 (work unit) is passed, between the pair of longitudinal frames 3L, 3R. Specifically, dimensions of each part of the support frame 3 are set so as to form the space Sp1 with a height and a width equal to or larger than the standard size of the crop V1 which is the spray target. Thus, in the case of the crop V1 with the standard size, the support frame 3, in a state of straddling the crop V1, allows the crop V1 to pass through the space Sp1 at an open interval of the given value or more so that the crop V1 does not contact the support frame 3. During the crop V1 passing through the space Sp1, the longitudinal frame 3L is positioned on the left of the crop V1, the longitudinal frame 3R is positioned on the right of the crop V1, and the transverse frame 3C is positioned above the crop V1.

More specifically, in the present embodiment, the support frame 3 is constituted substantially symmetrically in the right and left direction D2. The longitudinal frame 3L and the longitudinal frame 3R have a cylindrical shape with a circular cross section. In the present embodiment, as an example, each of the longitudinal frame 3L and the longitudinal frame 3R includes two cylindrical members provided side by side. The transverse frame 3C has a square cylindrical shape with a rectangular cross section. Here, the longitudinal frame 3L and the longitudinal frame 3R are firmly fixed to the transverse frame 3C, respectively, by appropriate fixing means such as connecting fittings, bracing fittings or welding. Thus, the longitudinal frame 3L and the longitudinal frame 3R remain a state orthogonal to the transverse frame 3C, respectively. In other words, in the rear view, each of an edge portion between the longitudinal frame 3L and the transverse frame 3C and an edge portion between the longitudinal frame 3R and the transverse frame 3C is orthogonal.

By the way, in the present embodiment, the support frame 3 is supported to the machine body 10 rotatably around a rotation axis Ax1 in a state where a relative positional relation between the pair of longitudinal frames 3L, 3R and the transverse frame 3C is maintained. The rotation axis Ax1 is an axis which passes through a fulcrum portion 31 provided on the transverse frame 3C and which is along the front/back direction D3. That is, the support frame 3 which supports the work unit (spray nozzle 41) is supported to the machine body 10 rotatably around the rotation axis Ax1 along the front/back direction D3. Here, the term "rotation axis" referred to in the present disclosure means a virtual axis (straight line) that serves as the center of a rotational motion of a rotating body. That is, the rotation axis Ax1 is a virtual axis without a substance. However, the rotation axis Ax1 may be a member with a substance such as a shaft pin, for example.

The spray device 4 has the spray nozzle 41 and the like for spraying the liquid spray matter. The spray device 4 performs the spray work in which a chemical solution as the spray matter tanked in the tank 64 is sprayed to the crop V1 which is the spray target. The spray nozzle 41 is supported to the support frame 3, and is a part that performs spraying of the spray matter. In the present embodiment, as an example, the spray nozzle 41 is a discharge port (spray portion) that actually serves as an outlet for the spray matter (chemical solution). The spray device 4 has a multiplicity (12 as an example in the present embodiment) of spray nozzles 41.

The spray device 4 includes, in addition to the spray nozzle 41, a spray pipe 42, a pump 43 (see Fig. 7), a valve 44 (see Fig. 7), a spray-dedicated piping, and other components. The spray nozzle 41 is an example of the work unit, which performs the work (spray work), and is supported to the support frame 3. Since the support frame 3 is supported to the machine body 10, the spray nozzle 41 (work unit) is indirectly supported to the machine body 10. In the present embodiment, the spray nozzle 41 is mounted to the spray pipe 42. The spray pipe 42 is connected to the pump 43 via the valve 44 by the spray-dedicated piping. To the spray pipe 42, the pump 43 pumps the spray matter (chemical solution) tanked in the tank 64. The valve 44 is an electronically controlled valve unit, such as an electromagnetic valve, that changes a pressure (spray pressure), a spray pattern and the like which are seen when the spray matter is to be sprayed. As a result, the chemical solution in the tank 64 is supplied by the pump 43 to the spray nozzle 41 via the valve 44 and the spray pipe 42, and is sprayed from the spray nozzle 41. Here, a chemical solution in a mist form is discharged (sprayed) from the spray nozzle 41.

In more detail, as shown in Figs. 9 and 10, the spray pipe 42 is a pipe having a length in the up and down direction D1, and the spray pipes 42 two in number are mounted to each of the longitudinal frame 3L and longitudinal frame 3R of the support frame 3. That is, in the present embodiment, the spray device 4 has four spray pipes 42 in total. The two (a pair) spray pipes 42 mounted to each of the longitudinal frame 3L and the longitudinal frame 3R are placed side by side in the right and left direction D2. Each of the spray pipes 42 causes the chemical solution, which is the spray matter poured from the upper end portion of the spray pipe 42, to be discharged from the three spray nozzles 41, while causing the chemical solution to flow downward through the pipe. Each of the spray pipes 42 has three spray nozzles 41 each mounted thereto; thereby, the spray device 4 has 12 spray nozzles 41 in total.

To the corresponding spray pipe 42, each of the spray nozzles 41 is so mounted as to change a position in the up and down direction D1. Accordingly, each of the spray nozzles 41 can change an interval to the adjacent spray nozzle 41 and the height position in the spray pipe 42 according to the spray target object (crop V). Further, each of the spray nozzles 41 is so mounted as to change, according to the spray target, the positions in the up and down direction D1 and in the right and left direction D2 and a direction (angle), relative to the machine body 10. However, in the spray device 4, the number and the like of spray nozzles 41 provided in each of the spray pipes 42 can be properly changed according to the type of the spray target (crop V1), the length of each of the spray pipes 42, and the like.

The airflow generation unit 5 generates an airflow that conveys the spray matter (chemical solution) discharged from the spray nozzle 41. The airflow generation unit 5 is supported to the support frame 3 together with the spray nozzle 41. That is, the spray machine 1 according to the present embodiment is an air-assist type spray machine that sprays the spray matter (chemical solution) by using the airflow generated by the airflow generation unit 5. As a result, the spray machine 1 can efficiently spray the spray matter (chemical solution) even to the spray target (crop V1) in a position relatively far from the spray nozzle 41.

The airflow generation unit 5 has a duct 51 and an air blower 52. The duct 51 forms a flow route for air to flow along the up and down direction D1. The air blower 52 causes the air to flow through the duct 51. The airflow generation unit 5 forms an airflow when the air is blown out of a blowout hole 511 (see Fig. 10) formed in the duct 51. In short, from the blowout hole 511 through the flow route in the duct 51, the airflow generation unit 5 blows out the air which the air blower 52 sends into the duct 51, thereby generating the flow of the air (airflow) that flows outward from the blowout hole 511. This configuration can generate a stable airflow over a relatively wide area. Further, the airflow generation unit 5 can adjust a flowrate of the airflow by controlling the air blower 52. Then, the airflow generation unit 5, by adjusting the air flowrate, can adjust a conveying distance of the spray matter; the higher the air flowrate is, the farther the spray matter can be conveyed. Thus, the spray machine 1 according to the present embodiment can adjust the range of the spray device 4's spraying of the spray matter.

In more detail, the duct 51 is a pipe having a length in the up and down direction D1; the duct 51 one in number is mounted to each of the longitudinal frame 3L and longitudinal frame 3R of the support frame 3. That is, in the present embodiment, the airflow generation unit 5 has the ducts 51 two in total. On each of a left lateral face and right lateral face of the duct 51, there are formed the multiple blowout holes 511 arranged in a row along the up and down direction D1. Further, two spray machine tubes 42 of the spray device 4 are fixed to each of the ducts 51.

Here, the duct 51, the two spray pipes 42 mounted thereto, and the six spray nozzles 41 in total mounted to these two spray pipes 42 are placed symmetrically in the right and left direction D2. And, of the two spray pipes 42, the three spray nozzles 41 provided in the spray pipe 42 on the left side discharge the spray matter (chemical solution) toward the front left, and the three spray nozzles 41 provided in the spray pipe 42 on the right side discharge the spray matter (chemical solution) toward the front right. Thus, the misty spray matter discharged from the spray nozzle 41 on the left side is conveyed leftward on the airflow blown out of the duct 51 to the left, while the misty spray matter discharged from the spray nozzle 41 on the right side is conveyed rightward on the airflow blown out of the duct 51 to the right.

Thus, in the multiplicity (12 pieces) of spray nozzles 41, the three spray nozzles 41 provided in the spray pipe 42 on the leftmost end spray the chemical solution leftward to the crop V1 positioned on the outer left side of the machine body 10. In the multiple spray nozzles 41, the three spray nozzles 41 provided in the spray pipe 42 on the inner left side adjacent to the spray pipe 42 on the leftmost end spray the chemical solution rightward to the crop V1 positioned in the space Sp1 inside the machine body 10. In the multiple spray nozzles 41, the three spray nozzles 41 provided in the spray pipe 42 on the rightmost end spray the chemical solution rightward to the crop V1 positioned on the outer right side of the machine body 10. In the multiple spray nozzles 41, the three spray nozzles 41 provided in the spray pipe 42 on the inner right side adjacent to the spray pipe 42 on the rightmost end spray the chemical solution leftward to the crop V1 positioned in the space Sp1 inside the machine body 10.

With the above configuration, in the spray device 4; the two spray pipes 42 and the six spray nozzles 41 provided on the longitudinal frame 3L of the support frame 3 function as a spray unit on the left side. Further, the two spray pipes 42 and the six spray nozzles 41 provided on the longitudinal frame 3R of the support frame 3 function as the spray unit on the right side. Then, in a state of being capable of spraying in the right and left direction D2, the pair of right and left spray units are so placed behind the machine body 10 as to make the interval (space Sp1), which allows passage of the crop V1, between the both.

Further, in the spray device 4, the multiple (12 units) spray nozzles 41 are divided into multiple systems, and each system is configured to be controllable. As an example, in the four spray pipes 42; the six spray nozzles 41 provided on the inner two spray pipes 42 in the right and left direction D2 are classified into a first system, the three spray nozzles 41 provided in the spray pipe 42 at the leftmost end are classified into a second system, and the three spray nozzles 41 provided in the spray pipe 42 at the rightmost end are classified into a third system. Thus, the spray patterns by the spray device 4 include an all-spray pattern in which the spray matter (chemical solution) is sprayed from all the spray nozzles 41, a spray-stop pattern in which the spraying of the spray matter stops from all the spray nozzles 41, and a limited-spray pattern in which the direction of spraying is limited. The limited-spray pattern includes a first spray pattern in which only the six spray nozzles 41 of the first system perform spraying, a second spray pattern in which only the three spray nozzles 41 of the second system perform spraying, and a third spray pattern in which only the three spray nozzles 41 of the third system perform spraying. Further, the limited-spray pattern includes a fourth spray pattern in which only the nine spray nozzles 41 of the first system and the second system perform spraying, a fifth spray pattern in which only the nine spray nozzles 41 of the first system and the third system perform spraying, and a sixth spray pattern in which only the six spray nozzles 41 of the second system and the third system perform spraying.

The spray device 4 is controlled by the control device 7, and the multiple spray patterns described above (six patterns in total including the all-spray pattern and the six limited-spray patterns) are switched as appropriate. The valves 44 of the spray device 4 are provided for each system of the multiple spray nozzles 41; in the present embodiment, the valves 44 three in number corresponding to the three systems (first system, second system, and third system) are provided. These multiple (here three) valves 44 are individually controlled by the control device 7 thereby to change the spray pattern. Further, the spray device 4 can change the spray range of the spray matter also by changing the pressure (spray pressure) at which the spray matter is sprayed in each system. Further, in the present embodiment, the spray range of the spray matter can be adjusted also by adjusting the air flowrate of the airflow generation unit 5; thus, a more diverse spray range can be realized according to the spray target (crop V1) or the spray matter (chemical solution). The configuration of the spray device 4 is described in more detail in the column "[3] Configuration of Spray Device".

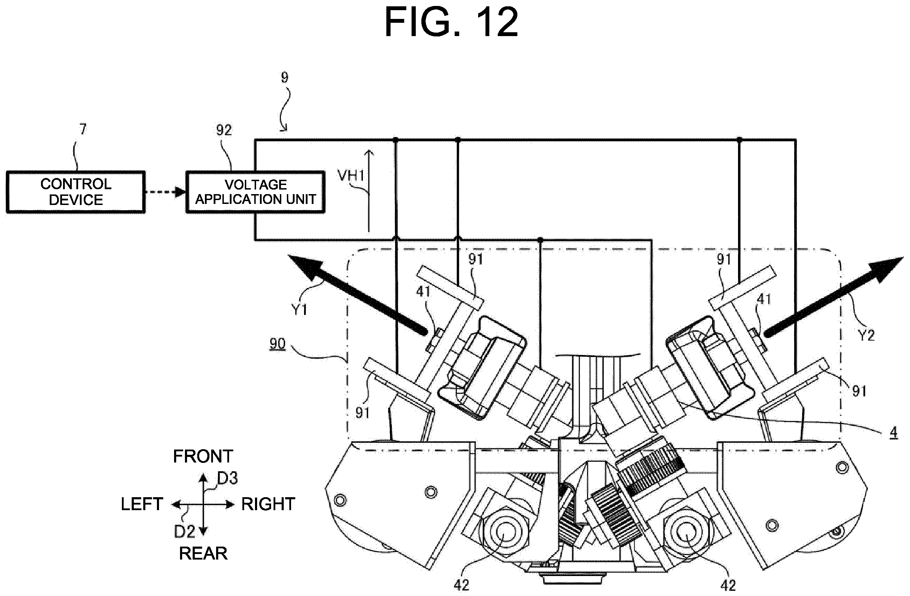

The electrostatic charge device 9 electrically charges the spray matter (chemical solution) that is sprayed from the multiple spray nozzles 41. The electrostatic charge device 9 applies a voltage (high voltage) VH1 (see Fig. 12) to a load 90 (see Fig. 12), which includes an electrode 91 (see Fig. 12), thereby to charge the spray matter. That is, the spray machine 1 according to the present embodiment is an electrostatic charge type spray machine in which the electrostatic charge device 9 applies an electric charge to the spray matter (chemical solution) sprayed from the spray nozzle 41 of the spray device 4, thereby to perform "electrostatic spraying" as a spray work. This improves the rate of the spray matter (chemical solution)'s adhering to the spray target (crop V1), compared to a normal spraying where the spray matter (chemical solution) is not charged. As a result, the spray machine 1, while reducing the consumption of the spray matter (chemical solution), can efficiently apply the spray matter to the spray target (crop V1).

The electrostatic charge device 9 is controlled by the control device 7, and can switch the state of applying the voltage VH1 to the load 90 which includes the electrode 91. As the state of applying the voltage VH1 to the load 90 which includes the electrode 91, the electrostatic charge device 9 can make at least a switching between an "actuated state" in which the voltage VH1 is applied to the load 90, and a "non-actuated state" in which the voltage VH1 is not applied to the load 90. When the state of applying the voltage VH1 to the load 90 in the "actuated state", the electrostatic charge device 9 charges the spray matter sprayed from the spray nozzle 41; thus, the spray work in this state is an electrostatic spraying. Meanwhile, when the state of applying the voltage VH1 to the load 90 is the "non-actuated state", the electrostatic charge device 9 does not charge the spray matter sprayed from the spray nozzle 41; thus, the spray work in this state is the normal spraying. The configuration of the spray device 4 is described in more detail in the column "[4] Configuration of Electrostatic Charge Device".

That is, in the present embodiment, the support frame 3 is not fixed relatively to the machine body 10, but is rather configured to be rotatable around the rotation axis Ax1. Rotating the support frame 3 also rotates, around the rotation axis Ax1, the multiple spray nozzles 41 supported to the support frame 3.

Further, the spray machine 1 according to the present embodiment does not include an actuator or the like that actively rotates the support frame 3. Thus, the support frame 3 rotates only after an external force acts on the support frame 3. For example, when the machine body 10 runs on a horizontally inclined slope, the support frame 3 rotates by its own weight, that is, the gravity acting on the support frame 3. In particular, when the support frame 3 and the members (the spray nozzle 41, the spray pipe 42, the airflow generation unit 5 and the like) supported to the support frame 3 have a symmetrical weight balance in the right and left direction D2, the support frame 3 is maintained in the neutral position as long as the machine body 10 is kept horizontal.

According to the rotatable support frame 3 as described above, the support frame 3, by rotating when the machine body 10 is running on the horizontally inclined slope, for example, prevents the spray nozzle 41 from causing an uneven spray rate (uneven spray) of the spray matter (chemical solution). In short, when the support frame 3 is firmly supported to the machine body 10, the machine body 10, as the case may be, is inclined while running on the horizontally inclined slope. And, in this case, as for the crop V1 (spray target) that extends vertically straight from the ground (farm field F1), the distances from the spray nozzle 41 are different between the upper portion and the lower portion of the crop V1, which may cause unevenness to the spray rate of the spray matter. In contrast, in the spray machine 1 according to the present embodiment; as for the support frame 3 and the spray nozzle 41 and the like which are supported to the support frame 3, the rotation of the support frame 3 can maintain the attitude same as that while the spray machine 1 running on the horizontal plane. Thus, even as for the crop V1 (spray target) extending vertically straight from the ground (farm field F1), the distances from the spray nozzle 41 between the upper portion and the lower portion of the crop V1 become less likely to vary, making it easier to suppress occurrence of unevenness in the spray rate of the spray matter.

The user interface 61 is a device that performs at least any one of outputting information to the user and receiving an operation from the user. Here, the user interface 61, as shown in Fig. 7, has a display unit 611 such as a liquid crystal display or an organic EL display that displays various types of information, and an operation unit 612 that receives an operation, such as a touch panel, a knob, or a pushbutton switch. An operator as an example of the user operates the operation unit 612 according to an operation screen displayed on the display unit 611 thereby to make it possible to make various types of settings. Specifically, the operator operates the operation unit 612 of the user interface 61 thereby to make the setting of an actuating condition and the like of the spray device 4. An example of the actuating conditions of the spray device 4 includes a pressure (jet pressure), a flowrate and the like seen when the spray matter is sprayed from the spray nozzle 41.

The obstacle detection device 62 includes a first sensor 621, a second sensor 622, a third sensor 623, and a fourth sensor 624. The first sensor 621 to the fourth sensor 624 are all placed to face the front of the machine body 10. The first sensor 621 is placed on a front left end portion on the upper face of the machine body 10, the second sensor 622 is placed on the front right end portion on the upper face of the machine body 10, the third sensor 623 is placed on a front face of the first block 10L, and the fourth sensor 624 is placed on the front face of the second block 10R, respectively. Further, the obstacle detection device 62 further includes a fifth sensor 625 (see Fig. 6) and a sixth sensor 626 (see Fig. 7). The fifth sensor 625 and the sixth sensor 626 are both placed to face the rear of the machine body 10. The fifth sensor 625 is mounted to the longitudinal frame 3L, and the sixth sensor 626 is mounted to the longitudinal frame 3R.

Each of the first sensor 621 to the sixth sensor 626 includes a sensor such as an image sensor (camera), a sonar sensor, a radar or a LiDAR (Light Detection and Ranging), for example, and detects a surrounding condition of the machine body 10. In the present embodiment, as an example, each of the first sensor 621 to the sixth sensor 626 is a three-dimensional sensor which measures a distance to each distance-measuring point (measuring target) in a measurement range by using a TOF (Time Of Flight) method which measures the distance to the distance-measuring point based on round-trip time for a light or a sound to reach the distance-measuring point and return. The surrounding conditions of the machine body 10 include, for example, presence or absence of an object (obstacle and the like) in front of the machine body 10 in the forward direction, a position (distance and azimuth) of the object, and the like.

The obstacle detection device 62 further includes a forward contact sensor 627 and a backward contact sensor 628. The forward contact sensors 627 are placed in a right and left pair on the front side of the machine body 10, and the backward contact sensor 628 are placed in a right and left pair on the rear side of the machine body 10. Each of the forward contact sensor 627 and the backward contact sensor 628 detects the obstacle when contacting the obstacle. Each of the sensors sends a detection signal to the control device 7 when detecting the obstacle.

The power source 63 is a drive source that supplies power at least to the run unit 11. The power source 63 has an engine, such as a diesel engine, for example. The power source 63 drives a hydraulic pump thereby to supply a hydraulic oil from the hydraulic pump to the motor 112 and the like of the run unit 11, thereby driving the run unit 11 and the like.

The tank 64 tanks the spray matter such as chemical solution. The spray matter tanked in the tank 64 is supplied to the spray device 4, and sprayed from the spray nozzle 41 of the spray device 4. From the outside, the tank 64 can be replenished with the chemical solution which is the spray matter. The capacity of the tank 64 is approximately 200L, as an example.

The display 65 is placed on the upper face of the machine body 10. The display 65 is formed in a columnar shape having a length in the up and down direction D1, as an example. The display 65 changes a lighting state in response to the actuating state (a run state, and a progress state of the spray work, and the like) of the spray machine 1. As a result, the actuating state of the spray machine 1 can be visually recognized even from the periphery of the spray machine 1.

The control device 7 is mainly configured by a computer system having one or more processors such as a CPU (Central Process unit), and one or more memories such as a ROM (Read Only Memory) and a RAM (Random Access Memory), and executes various processes (information process). According to the present embodiment, the control device 7 is an integrated controller that controls the overall spray machine 1, and includes, for example, an electronic control unit (ECU). However, the control device 7 may be provided separate from the integrated controller, and may be primarily composed of one or more processors.

As shown in Fig. 5, the control device 7 has an acquisition process unit 71, a run process unit 72, an output process unit 73, an electrostatic charge process unit 74, a spray process unit 75, an automatic run process unit 76, and a storage unit 77. In the present embodiment, as one example, the control device 7 is mainly composed of a computer system having one or more processors; thus, the one or more processors, by executing the control program, realize the above multiple functional units (acquisition process unit 71 and the like). These plural functional units included in the control device 7 may separately be provided in plural housings or may be provided in a single housing.

The control device 7 is so configured as to be communicable with a device provided at each unit of the machine body 10. That is, at least the run unit 11, the positioning device 2, the spray device 4, the electrostatic charge device 9, the airflow generation unit 5, the user interface 61, the obstacle detection device 62, the power source 63, and the display 65 are connected to the control device 7. This allows the control device 7 to control the run unit 11 and the spray device 4, etc., and to acquire an electric signal from the positioning device 2, the obstacle detection device 62, etc. Here, the control device 7 may send and receive various types of information (data) directly to and from each device, or indirectly through a relay or the like.

Further, the control device 7, in addition to the above functional units, includes an engine control unit, an HST (Hydro-Static Transmission) control unit which executes control on a hydrostatic continuously variable transmission, and the like. The engine control unit executes control on the engine (power source 63). The HST control unit executes control on the hydrostatic continuously variable transmission.

The acquisition process unit 71 executes the acquisition process to acquire the electric signal (including data) from each device. In the present embodiment, the acquisition process unit 71 acquires at least the actuated state of the machine body 10. Specifically, the acquisition process unit 71 acquires an operation signal from an operation device 83 described below. That is, when the operation device 83 outputs the operation signal which accords to an operation of an operator (user), the acquisition process unit 71 acquires the above operation signal. Further, from the positioning device 2, the acquisition process unit 71 acquires position information on the current position of the machine body 10. Further, from the run unit 11, the acquisition process unit 71 acquires information (data) such as the drive speed of the crawler 111. Further, from a level sensor provided in the tank 64, the acquisition process unit 71 acquires residual volume information on the residual volume of the spray matter (chemical solution) tanked in the tank 64.

The run process unit 72 executes a run control process to control the run unit 11 according to the operation signal acquired by the acquisition process unit 71. That is, the control device 7 controls the run unit 11 by the run process unit 72, thereby to make it possible to control the run unit 11 according to the operator's operating of the operation device 83, i.e., a manual operation of the run unit 11.

The electrostatic charge process unit 74 executes an electrostatic charge process related to the control of the electrostatic charge device 9. Specifically, to the electrostatic charge device 9, the electrostatic charge process unit 74 outputs an electrostatic switch signal that makes a switching between the "actuated state" in which the voltage VH1 is applied to the load 90 and the "non-actuated state" in which the voltage VH1 is not applied to the load 90. When receiving the electrostatic switch signal, the electrostatic charge device 9 accordingly makes a switching between the actuated state and the non-actuated state. Here, the electrostatic charge process unit 74 controls, according to the actuated state of the machine body 10, the electrostatic charge device 9 in a manner to change the state of applying the voltage VH1 to the load 90. That is, the electrostatic charge process unit 74, according to the machine body 10's actuated state acquired by the acquisition process unit 71, changes the state of applying the voltage VH1 to the load 90 in a manner to at least make a switching between the actuated state and the non-actuated state. This makes it possible to make a switching, for the spray work by the spray device 4, between the electrostatic spraying and the normal spraying, without the need for the operation by the operator or the like.

The output process unit 73 executes an output process to output various types of information. According to the present embodiment, the output process unit 73 causes the display 65 (display unit) to display the state of applying the voltage VH1 to the load 90, which state is switched at least by the electrostatic charge process unit 74, thereby to present the state of applying the voltage VH1 to the load 90. Here, the presented information does not have to be the state itself of applying the voltage VH1 to the load 90. As an example, the output process unit 73, when the state of applying the voltage VH1 is the "actuated state", presents information showing the state in which the "electrostatic spraying" can be performed, and when the state of applying the voltage VH1 is the "non-actuated state", presents information showing the state in which the "normal spraying" can be performed.

Here, the output mode of the output process unit 73 is not limited to displaying on the display unit (display 65, etc.), but may also include sending to a terminal (user terminal 82, operation device 83, etc.) outside the spray machine 1, writing in a non-transitory recording medium such as the storage unit 77, printing, or sound (including voice) outputting or other means, or a combination of thereof. As an example, when sending, to the user terminal 82 or the operation device 83 external to the spray machine 1, the state of applying the voltage VH1 to the load 90, the output process unit 73 may present the application state by causing the display unit 821 of the user terminal 82 or the display 832 of the operation device 83 to display the application state.

The spray process unit 75 executes a spray control process related to the work (spray work) of the spray device 4 and airflow generation unit 5, etc. Specifically, when the spray machine 1 starts automatically running in the work start position; to the spray device 4, the spray process unit 75, based on the control information included in the predetermined target route, outputs a switch signal to switch the spray pattern. When receiving the switch signal, the spray device 4 executes the spray work in a given spray pattern. This means that the multiple spray nozzles 41 in the spray device 4 spray the spray matter at least during the automatic run of the machine body 10.

The automatic run process unit 76 causes the machine body 10 to automatically run along the target route of the farm field F1 based on positioning information and the like acquired from the positioning device 2. Specifically, the automatic run process unit 76 causes the run unit 11 to automatically run along the target route based on the positioning information including the machine body 10's position and azimuth measured by the positioning device 2. For example, when the positioning information is ready for the RTK positioning, the operator pressing the start button (automatic run start instruction) on the operation screen of the user terminal 82 causes the user terminal 82 to output an automatic run start instruction (work start instruction) to the spray machine 1. Acquiring the automatic run start instruction from the user terminal 82, the automatic run process unit 76 causes the spray machine 1 to start automatically run based on the positioning information of the machine body 10 positioned by the positioning device 2. As a result, the spray machine 1 starts automatically running along the target route, starting the spray work by the spray device 4.

The storage unit 77 is a non-transitory storage medium including, for example, RAM or external memory, which stores various types of information. Further, the storage unit 77 stores information such as the target route used for the automatic run of the spray machine 1.

The communication terminal is a communication interface that connects the spray machine 1 to the communication network by wired or wireless connection, and executes data communication, which accords to a given communication protocol, with external devices such as the user terminal 82, the server 81 and the like via the communication network. Electronic devices such as the positioning device 2, the control device 7, and the communication device are connected to a battery, and can be actuated even during the stop of the power source 63.

By the way, as shown in Fig. 5, the spray machine 1 according to the present embodiment can communicate with the operation device 83, and the control device 7 (acquisition process unit 71) acquires the operation signal which the operation device 83 outputs in response to the operator's operation. Together with the operation device 83 for manually controlling the spray machine 1, the (control device 7 of) spray machine 1 constitutes a manual control system. In other words, the manual control system has the (control device 7 of) spray machine 1 and the operation device 83.

In the present embodiment, the operation device 83 is connected to the control device 7 of the spray machine 1 by a cable having a sufficient length, and communicates with the spray machine 1 by wire. Thus, the operator can manually operate the spray machine 1 by the operation device 83 without boarding the spray machine 1 body 10, for example, while standing around the machine body 10. Here, the operation device 83 may wirelessly communicate with the spray machine 1 using a radio wave or a light; even in this case, the operator can manually operate the spray machine 1 by the operation device 83 from outside the machine body 10. In short, the operation device 83 can be operated outside of the machine body 10. Thus, when loading or unloading the spray machine 1 onto or off a transport vehicle, for example, the operator can manually operate the spray machine 1 from a safe place outside the machine body 10.

Further, as shown in Fig. 7, the machine body 10 has a housing unit 80 that can house the operation device 83. Then, the automatic run process unit 76 of the control device 7 causes the spray machine 1 (work machine) to start automatically run only when the operation device 83 is housed in the housing unit 80. That is, when the operation device 83 is not in use, such as when the spray machine 1 is automatically running, the operation device 83 can be housed in the housing unit 80 of the machine body 10, leading to preventing of loss of the operation device 83, etc. Further, the spray machine 1 does not start automatically running when the operation device 83 is not housed in the housing unit 80; thus, it is possible to make it a habit for the operator to house the operation device 83 in the housing unit 80 of the machine body 10 when the operation device 83 is not in use.

Specifically, housing unit 80 is provided on the second block 10R side, as is the user interface 61 and the like. The display unit 611 including a liquid crystal display, for example, is placed close to the front end on the outer side (right side) of the second block 10R, and a knob, a pushbutton switch or the like as the operation unit 612 is placed below the display unit 611. Then, the housing unit 80 is placed further below the operation unit 612 on the outer side (right side) of the second block 10R. The housing unit 80 includes a recess unit large enough to house the operation device 83.

A contact or non-contact sensor (including a switch) is provided inside the housing unit 80; whether or not the operation device 83 is housed in the housing unit 80 is detected by the sensor. A detection result of the above sensor is acquired by the (acquisition process unit 71 of) control device 7. Only when the detection result of the above sensor shows that the operation device 83 is housed in the housing unit 80, the automatic run process unit 76, when acquiring an automatic run start instruction from the user terminal 82, causes the spray machine 1 to start automatically running. That is, when the detection result of the above sensor shows that the operation device 83 is not housed in the housing unit 80, the automatic run process unit 76, even if acquiring the automatic run start instruction from the user terminal 82, prevents the spray machine 1 from starting automatically running.

### [3] Configuration of Spray Device

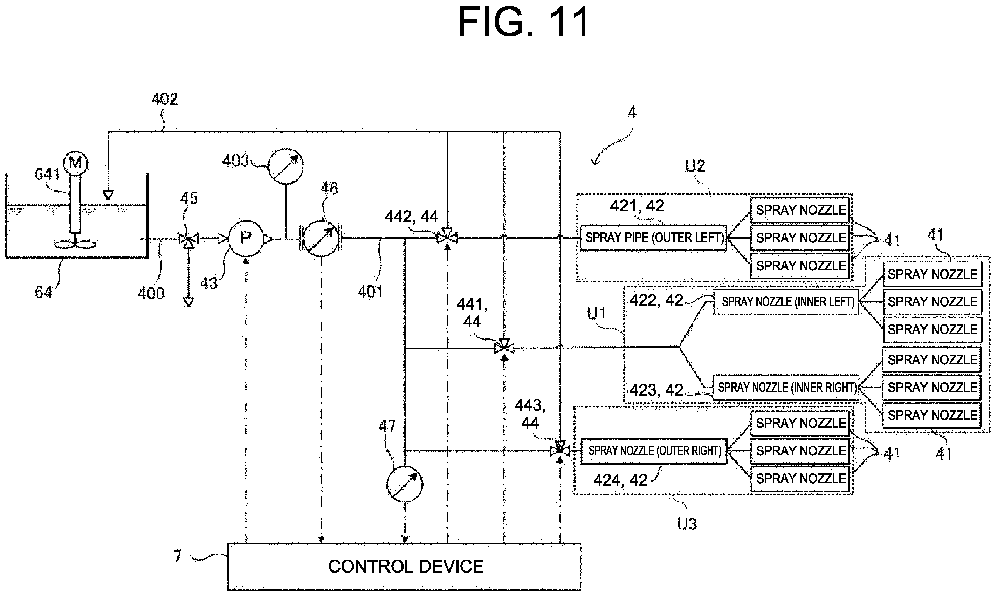

Next, the configuration of the spray device 4 of the spray machine 1 will be described in more detail with reference to Fig. 11. Fig. 11 schematically shows the configuration of the spray device 4. In Fig. 11, the solid line indicates the route (flow route) through which the spray matter (chemical solution) passes, and the single-dotted arrow indicates the route of the electric signal.

The spray machine 1 according to the present embodiment, as described above, the spray device 4 has a multiplicity (12 pieces) of spray nozzles 41, the four spray pipes 42, the pump 43, the three valves 44, and the spray-dedicated piping, etc. Further, the spray device 4 has a water-stop drain valve 45, a discharge-side flowmeter 46, a pressure sensor 47, and a pressure gauge 403. In Fig. 11, a filters, a manual adjustment valve and the like provided in the spray-dedicated piping are omitted as appropriate.

The four spray pipe 42 include a first spray pipe 421 (outer left) positioned at the leftmost end, a second spray pipe 422 (inner left) positioned on the inner left, a third spray pipe 423 (inner right) positioned on the inner right, and a fourth spray pipe 424 (outer right) positioned at the rightmost end. Each of the above first to fourth spray pipes 421 to 424 is provided with three spray nozzles 41, and the spray matter (chemical solution) supplied to each of the spray pipes 42 is sprayed (discharged) from the three spray nozzles 41 provided in the spray pipes 42. The six spray nozzles 41 provided in the second and third spray pipes 422 and 423 are classified into the first system, the three spray nozzles 41 provided in the first spray pipe 421 are classified into the second system, and the three spray nozzles 41 provided in the fourth spray pipe 424 are classified into the third system.

In short, the present embodiment has multiple spray nozzles 41 that are supported to the machine body 10 and spray the liquid spray matter. Here, the multiple spray nozzles 41 are classified into plural (here three) systems U1, U2, and U3, as shown in Fig. 11. The first system U1 includes a second spray pipe 422, a third spray pipe 423, and six spray nozzles 41 provided for the above. The second system U2 includes a first spray pipe 421 and three spray nozzles 41 provided for the above. The third system U3 includes a fourth spray pipe 424 and three spray nozzles 41 provided for the above. Thus, the multiple systems U1, U2 and U3 each include the spray pipe 42 that extends along the up and down direction D1 and supplies the spray matter to one or more of the multiple spray nozzles 41. This makes it possible to switch the spray pattern in unit of spray pipes 42 as the spray matter's supply route to the spray nozzles 41.

Here, the spray-dedicated piping includes a tank route 400 which is the route (flow route) of the spray matter from the tank 64 to the pump 43, a supply route 401 which is the route (flow route) of the spray matter from the pump 43 to the spray pipe 42, and a return route 402 which is the route (flow route) of the spray matter from the supply route 401 to the tank 64. That is, in the present embodiment, between the tank 64 and the spray pipe 42, the supply route 401, which is the route on the discharge side of the spray matter, and the return route 402, which is the route on the return side of the spray matter, are provided in parallel. The supply route 401 is divided from one pump 43 into three systems along the way, leading to the spray pipes 42 of the three systems. That is, the supply route 401 is divided into a route leading to the second spray pipe 422 and the third spray pipe 423 which are included in the first system U1, a route leading to the first spray pipe 421 included in the second system U2, and a route leading to the fourth spray pipe 424 included in the third system U3. Meanwhile, the three system's return routes 402 leading to the three system's supply routes 401 merge into one and lead to the one tank 64.

The tank route 400 is provided with a water-stop drain valve 45. The water-stop drain valve 45 shuts off between the tank 64 and the pump 43, making it possible to cause the spray matter in the tank 64 to be discharged (drained) to the outside. The pump 43 is electrically connected to the control device 7, and is controlled by the control device 7 (spray process unit 75). Meanwhile, the discharge-side flowmeter 46 is provided in the supply route 401 which is the discharge side of pump 43. The discharge-side flowmeter 46 detects the flowrate of the spray matter (chemical solution) discharged from the pump 43. The discharge-side flowmeter 46 is an electromagnetic flowmeter as an example, and outputs a flowrate signal, which shows the detection result, to the control device 7 (acquisition process unit 71). Further, the pressure gauge 403 is an analog gauge as an example, and is provided in the supply route 401 which is the discharge side of the pump 43. The pressure gauge 403 is positioned between the pump 43 and the discharge-side flowmeter 46, and displays the pressure of the spray matter (pressure in the supply route 401) discharged from the pump 43.

The three valves 44 are provided for each of the systems U1, U2 and U3 of the multiple spray nozzles 41, and in the present embodiment, correspond to three systems (first system U1, second system U2, and third system U3). These multiple (three) valves 44 are individually controlled by the control device 7 (spray process unit 75) thereby to change the spray pattern. That is, the three valves 44 include a first valve 441 provided in the branch route leading to the first system U1's spray pipes 42 (422, 423) in the supply route 401, a second valve 442 provided in the branch route leading to the second system U2's spray pipe 42 (421) in the supply route 401, and a third valve 443 provided in the branch route leading to the third system U3's spray pipe 42 (424) in the supply route 401. Each of the valves 44 is a three-way solenoid valve (directional valve) that selectively connects the supply route 401, which leads to the pump 43, to the spray pipe 42 or the return route 402. Then, the first to third valves 441 to 443 are electrically connected to the control device 7, and are individually controlled by the control device 7 (spray process unit 75).

The pressure sensor 47 detects the pressure in the supply route 401 where the spray matter (chemical solution) is discharged from the pump 43. To the control device 7 (acquisition process unit 71), the pressure sensor 47 outputs a pressure signal showing the detection result. In the supply route 401, the pressure sensor 47 is positioned downstream of the discharge-side flowmeter 46 and upstream of the three valves 44. That is, the pressure sensor 47 is directly connected to a branch point of the three systems of the supply route 401, and detects the pressure of the spray matter at the above branch. Thus, it is possible to detect, with the single pressure sensor 47, the pressure in the supply route 401 branched into multiple systems (three systems in the present embodiment).

As shown in Fig. 11, a stirring device 641 that stirs the spray matter (chemical solution) in the tank 64 may be provided in the tank 64. The stirring device 641 is driven by a motor, performing the work of stirring the spray matter. This facilitates uniformity in the concentration of the spray matter, preventing a clogging of the spray nozzle 41.

According to the above configuration, the spray device 4 changes the spray pattern by controlling the first to three valves 441 to 443 when the water-stop drain valve 45 is open and the pump 43 is driven. For example, in the state where all of the first to three valves 441 to 443 connect the supply route 401 to the spray pipes 42, the spray pattern is the all-spray pattern in which the spray matter (chemical solution) is sprayed from all the spray nozzles 41. Meanwhile, in the state where only the first valve 441 out of the first to three valves 441 to 443 connects the supply route 401 to the spray pipe 42, the spray pattern is the first spray pattern in which only the six spray nozzles 41 included in the first system U1 perform the spraying. In the state where all of the first to three valves 441 to 443 connect the supply route 401 to the return route 402, the pattern is the spray-stop pattern where spraying of the spray matter (chemical solution) from all the spray nozzles 41 stops.

Here, the portion that is of the spray matter supplied from the pump 43 to the supply route 401 and that is not sprayed from the spray pipe 42 is returned through the return route 402 to the tank 64. For example, in the state where all of the first to three valves 441 to 443 connect the supply route 401 to the spray pipe 42, the rate of the spray matter returned to the tank 64 is 0 (zero). Meanwhile, in the state where only the first valve 441 out of the first to three valves 441 to 443 connect the supply route 401 to the spray pipe 42, the spray matter passing through the second and third valves 442, 443 is returned through the return route 402 to the tank 64. In the state where all of the first to three valves 441 to 443 connect the supply route 401 to return route 402, all of the spray matters supplied from the pump 43 to the supply route 401 are returned through the return route 402 to the tank 64. Thus, under a normal state, the detection result of the pressure sensor 47, i.e., the pressure at (the branch point of the three systems of) the supply route 401 is constant regardless of the spray pattern.

### [4] Configuration of Electrostatic Charge Device

Next, the configuration of the electrostatic charge device 9 of the spray machine 1 according to the present embodiment will be described in more detail with reference to Fig. 12. Fig. 12 schematically shows the relation of the electrostatic charge device 9 connected to the multiple spray nozzles 41. Fig. 12 shows a schematic plan view of the multiple spray nozzles 41 provided on the two spray pipes 42 mounted to the longitudinal frame 3R (or longitudinal frame 3L).

The electrostatic charge device 9 applies the voltage VH1 to the load 90 which includes the electrode 91, thereby to electrically charge the spray matter sprayed from the spray nozzle 41. The electrostatic charge device 9 has the electrode 91 and a voltage application unit 92. The load 90 includes the electrode 91 and the spray nozzle 41. The electrode 91 is so placed as to face the spray nozzle 41 via a gap. As an example according to the present embodiment, a pair of electrodes 91 is placed for one spray nozzle 41, and the pair of electrodes 91 are arranged on both sides of the spray nozzle 41 in plan view. The voltage application unit 92 applies the voltage VH1 to between the conductive spray nozzle 41 and the electrode 91, thereby to electrically charge the spray matter (chemical solution) sprayed (discharged) from the spray nozzle 41.

The voltage application unit 92 includes a voltage booster circuit, and boosts an input voltage from a power source (such as a battery), thereby to generate the voltage VH1 applied to the load 90. The voltage application unit 92 is electrically connected to the load 90 (spray nozzle 41 and electrode 91). As an example here, the voltage application unit 92 is so configured as to apply the voltage VH1 to between the spray nozzle 41 and the electrode 91, with the spray nozzle 41 as the negative pole (ground) and the electrode 91 as the positive pole (plus). In other words, when the voltage VH1 is applied from the voltage application unit 92 to the load 90, a potential difference, with the electrode 91 side at a high potential and the spray nozzle 41 side at a low potential, is caused between the spray nozzle 41 and the electrode 91.

The voltage VH1 applied by the voltage application unit 92 is, as an example, a high voltage of about several kV. The magnitude of the voltage VH1 is set according to, for example, the shapes of the spray nozzle 41 and electrode 91, or the distance between the spray nozzle 41 and the electrode 91.

In the present embodiment, the control device 7 (electrostatic charge process unit 74) controls the voltage application unit 92. That is, according to the electrostatic switch signal from the control device 7, the voltage application unit 92 makes a switching between the "actuated state" in which the voltage VH1 is applied to the load 90 and the "non-actuated state" in which the voltage VH1 is not applied to the load 90.

The three spray nozzles 41 provided at the left spray pipe 42 of the two spray pipes 42 discharge the spray matter toward a front left Y1, and the three spray nozzles 41 provided at the right spray pipe 42 of the two spray pipes 42 discharge the spray matter toward a front right Y2. Here, the atomized sprayed discharged from each of the spray nozzles 41 passes between the pair of electrodes 91 that correspond to each of the spray nozzles 41.

Thus, when the state of applying the voltage VH1 to the load 90 is the "actuated state", the spray matter sprayed from the spray nozzle 41 is charged when passing through between the pair of electrodes 91. Meanwhile, when the state of applying the voltage VH1 to the load 90 is the "non-actuated state", the spray matter sprayed from the spray nozzle 41 is not charged even when passing through between the pair of electrodes 91. However, during the startup period for the electrostatic charge device 9 to start up, the voltage VH1 of sufficient magnitude is not applied to the load 90; thus, the spray matter sprayed from the spray nozzle 41 is not charged, regardless of the state of applying the voltage VH1 to the load 90.

In the present embodiment, the state of applying the voltage VH1 to the load 90 which includes the electrode 91 is switched in a batch for the multiple spray nozzles 41. That is, when the state of applying the voltage VH1 to the load 90 is the "actuated state" for part of the multiple spray nozzles 41, the state of applying the voltage VH1 to the load 90 is the "actuated state" for the remaining spray nozzle 41 as well.

According to the configuration described above, the electrostatic charge device 9 charges the spray matter (chemical solution) sprayed from the multiple spray nozzles 41, thereby to make it possible to realize the electrostatic spraying. However, the electrode 91 is basically placed in a state of being exposed around the spray nozzle 41. Thus, the electrode 91 is present in a position that can be touched by the operator for adjusting the direction of the spray nozzle 41, for example.

### [5] How to Control Spray Machine

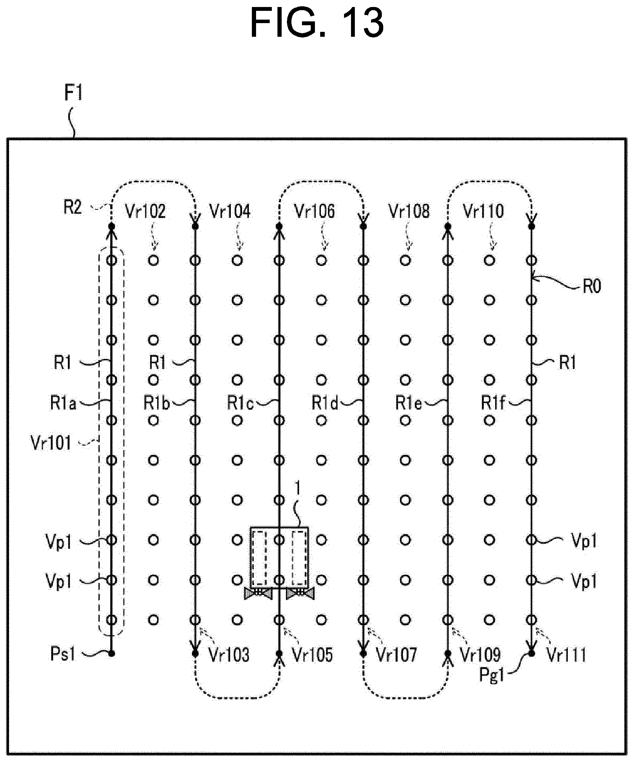

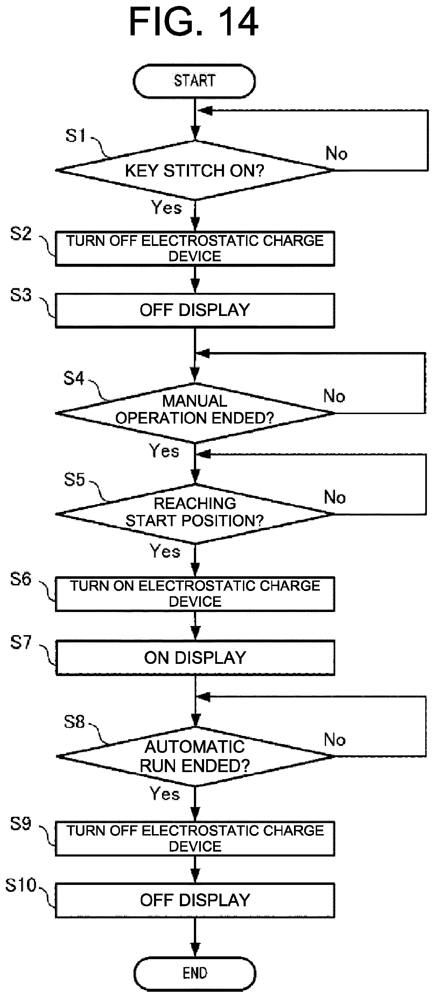

Hereinafter, an example of the work machine (spray machine 1)'s control method (hereinafter, simply referred to as a "control method") executed mainly by the control device 7 will be described with reference to Fig. 13 and Fig. 14. Fig. 13 is an illustration showing an example of a target route R0 for the automatic run. Fig. 14 is a flowchart showing an example of the control method according to the present embodiment, especially an electrostatic charge process related to the control of the electrostatic charge device 9. However, the flowchart shown in Fig. 14 is merely one example; thus, the process may be properly added or omitted, and the order of the processes may be properly replaced.

The control method according to the present embodiment is executed by the control device 7 mainly composed of the computer system; thus, in other words, the control method is embodied by a control program of the work machine (spray machine 1) (hereinafter, simply referred to as "control program"). That is, the control program according to the present embodiment is a computer program that causes one or more processors to execute each of processes related to the control method. The above control program may be cooperatively executed by, for example, the control device 7 and the server 81.

Hereinafter, there is assumed a situation in which the spray machine 1 is caused to start automatically run while being caused to perform the spray work of the spray matter (chemical solution). However, until the automatic run's start position in the farm field F1 (automatic run start position Ps1), the operator shall manually drive the spray machine 1, for example. For example, the operator, by using a conveying vehicle, conveys the spray machine 1 from a storage (barn, etc.) to the farm field F1, then manually drives the spray machine 1 to the automatic run start position Ps1 in the farm field F1, and then causes the spray machine 1 to start automatically run.

### General Processes Related To Automatic Run

The spray machine 1 can automatically run (autonomously run) along the target route R0 preset for the farm field F1 as shown in Fig. 13, for example. For example, from the automatic run start position Ps1 to an automatic run goal position Pg1, the spray machine 1 automatically runs along the target route R0 which includes a work route R1 (work routes R1a to R1f) and a transfer route R2. The automatic run start position Ps1 is a start of the target route R0, and is an example of the work start position of the spray work by the spray machine 1. The automatic run goal position Pg1 is an end of the target route R0, and is an example of the work end position of the spray work by the spray machine 1. The work route R1 is a straight route on which the spray machine 1 performs the spray work on the crop V, and the transfer route R2 is a route on which the spray machine 1 moves between the crop rows Vr1 without performing the spray work. The transfer routes R2 include a turning route and a straight-forward route, for example. In the example shown in Fig. 13, the crops V1 included in crop rows Vr101 to Vr111 are placed in the farm field F1. In Fig. 13, a position where the crop V1 is planted (crop position) is shown by "Vp1".

Further, the spray machine 1 automatically runs in a given row order. For example, the spray machine 1 runs over the crop row Vr101, then runs over the crop row Vr103, and then runs over the crop row Vr105. In this way, the spray machine 1 performs the automatic run according to a preset order of the crop rows Vr1. The spray machine 1 may run one row in the order in which the crop rows Vr1 are arranged, or may run every plural rows.

Specifically, the automatic run process unit 76 of the control device 7, by acquiring the automatic run start instruction (work start instruction) from the user terminal 82 while the spray machine 1 is in the automatic run start position Ps1, causes the run unit 11 to start automatically run. For example, when the operator presses the start button at the user terminal 82 after manually driving the spray machine 1 to the automatic run start position Ps1 based on the run instruction operation by the operator using a manual operation device 83 or the like, the user terminal 82 outputs the automatic run start instruction to the spray machine 1.

When acquiring the automatic run start instruction from the user terminal 82, the automatic run process unit 76 of the control device 7 executes automatic run along the target route R0 that accords to the route data. The route data includes route information that identifies the target route R0 and work instruction information on the spray work of the spray matter (chemical solution) in each position on the target route R0. The work instruction information is, as an example, information showing the spray rate and/or spray pattern of the spray matter. The route data is generated by the server 81, and is sent from the server 81 directly or indirectly via the user terminal 82, etc., to the control device 7 of the spray machine 1. At this time, the automatic run process unit 76 stores the acquired route data in the storage unit 77. Not limited to at the server 81, the route data may be generated, for example, at the user terminal 82.

During the automatic run of the spray machine 1, the spray process unit 75 controls the spray device 4, opens at least the water-stop drain valve 45 and drives the pump 43, thereby to perform the spray work to spray the spray matter (chemical solution) from the spray nozzle 41 in a desired spray pattern. Here, the spray process unit 75 controls the spray device 4 based on the current position of the spray machine 1 so that the spray machine 1 performs the spraying when running on the work route R1 (work routes R1a to R1f) and does not perform the spraying when running on the transfer route R2. Further, depending on which of the work routes R1a to R1f the spray machine 1 is running along, the spray process unit 75 switches the spray pattern of the spray device 4 so that the spray matter (chemical solution) is sprayed to the spray target (crop V1).

Basically, the automatic run process unit 76 and spray process unit 75 of the control device 7 execute the automatic run and the spray work until the position of the spray machine 1 matches the automatic run goal position Pg1. When the spray machine 1 reaches the automatic run goal position Pg1, the control device 7 determines that the spray machine 1 has finished its work and ends the automatic run and the spray work. That is, the control method according to the present embodiment has spraying the spray matter from the spray nozzle 41 while causing the machine body 10 to automatically run along the target route R0.

By the way, the control method according to the present embodiment is the control method of the spray machine 1 provided with the machine body 10 capable of running, the multiple spray nozzle 41 that is supported to the machine body 10 and sprays the liquid spray matter, and the electrostatic charge device 9. The electrostatic charge device 9 applies the voltage VH1 to the load 90 which includes the electrode 91, thereby to electrically charge the spray matter sprayed from the spray nozzle 41. The control method according to the present embodiment has acquiring the actuated state of the machine body 10, and controlling, according to the actuated state of the machine body 10, the electrostatic charge device 9 in a manner to change the state of applying the voltage VH1 to the load 90. Thus, the control method according to the present embodiment includes the electrostatic charge process that controls, according to the actuated state of the machine body 10, the electrostatic charge device 9 in a manner to change the state of applying the voltage VH1 to the load 90. Here, the control method according to the present embodiment executes the electrostatic charge process that controls the electrostatic charge device 9 so that the voltage VH1 is applied to the load 90 while basically the spray machine 1 is automatically running.

This, without the operation of the operator or the like, automatically changes the state of applying the voltage VH1 to the load 90, thus making it easy to prevent the operator or the like from erroneously touching the electrode 91 to which a high voltage is applied. Details of the electrostatic charge process are described in the column "[5.2] Electrostatic Charge Process".

### Electrostatic Charge Process

As shown in Fig. 14, the control device 7 is triggered by, for example, turning on a key switch for starting the engine (power source 63) of the spray machine 1 (S1: Yes), and starts the processes from step S2 onward. Here, the control device 7, when the key switch is turned on (S1: Yes), moves the process to step S2. Meanwhile, the control device 7, when the key switch is off (S1: No), repeats the process of step S1.

For executing the processes from step S2 onward, the acquisition process unit 71 of the control device 7 acquires at least the actuated state of the machine body 10 from time to time. Here, the actuated state of the machine body 10 includes information (data) such as the operation signal from the operation device 83, position information on the current position of the machine body 10, and the drive speed of the crawler 111.

In step S2, the electrostatic charge process unit 74 of the control device 7 first stops the actuation of the voltage application unit 92, and sets the state of applying the voltage VH1 to the load 90 (spray nozzle 41 and electrode 91) to the "non-actuated state" where no voltage VH1 is applied to the load 90. This puts the electrode 91 in the non-charge state; thus, the operator or the like can touch the electrode 91 in this state. In step S3, the output process unit 73 of the control device 7 causes the display 65 (display unit) to display the state of applying the voltage VH1 to the load 90. At this time, the state of applying the voltage VH1 to the load 90 is the "non-actuated state"; thus, the output process unit 73 causes the display 65 to show an "off display" showing that the electrostatic charge device 9 is off (stopped).

In step S4, the electrostatic charge process unit 74 of the control device 7, based on the machine body 10's actuated state acquired by the acquisition process unit 71, determines whether or not the machine body 10's manual operation by the operation device 83 has been ended. At this time, when determining, from the detection result of the sensor placed inside the housing unit 80, that the operation device 83 is housed in the housing unit 80, the electrostatic charge process unit 74 determines that the machine body 10's manual operation by the operation device 83 is ended (S4: Yes), and moves the process to step S5. Meanwhile, when determining, from the detection result of the sensor placed inside the housing unit 80, that the operation device 83 is not housed in the housing unit 80, the electrostatic charge process unit 74 determines that the machine body 10's manual operation by the operation device 83 has not been ended (S4: No), and repeats the process of step S4.

In step S5, the electrostatic charge process unit 74 of the control device 7, based on the machine body 10's actuated state acquired by the acquisition process unit 71, determines whether or not the machine body 10 has reached the automatic run start position Ps1 which is the start position for the automatic run. At this time, when determining that the machine body 10's current position identified from the position information on the current position of the machine body 10 is in the automatic run start position Ps1, the electrostatic charge process unit 74 determines that the machine body 10 has reached the start position of the automatic run (S5: Yes), and moves the process to step S6. Meanwhile, when determining that the machine body 10's current position identified from the position information on the current position of the machine body 10 is not in the automatic run start position Ps1, the electrostatic charge process unit 74 determines that the machine body 10 has not reached the automatic run start position (S5: No), and repeats the process of step S5.

In step S6, the electrostatic charge process unit 74 of the control device 7 drives the voltage application unit 92 thereby to set the state of applying the voltage VH1 to the load 90 (spray nozzle 41 and electrode 91) to the "actuated state" where the voltage VH1 is applied to the load 90. As a result, the electrode 91 is put in the charge state, and the spray device 4 spraying the spray matter (chemical solution) in this state realizes "electrostatic spraying" in which the charged spray matter is sprayed. In step S7, the output process unit 73 of the control device 7 causes the display 65 (display unit) to display the state of applying the voltage VH1 to the load 90. At this time, the state of applying the voltage VH1 to the load 90 is the "actuated state"; thus, the output process unit 73 causes the display 65 to show an "on display" showing that the electrostatic charge device 9 is on (being actuated).

Thus, in the control method according to the present embodiment; after the operation device 83 ends the operation for controlling the machine body 10 (S4: Yes), the electrostatic charge device 9 is so controlled as to start applying the voltage VH1 to the load 90 (S6). That is, the condition for starting applying the voltage VH1 to the load 90 includes ending the manual operation of the operation device 83, and applying the voltage VH1 to the load 90 can be prohibited during the operator's manually operating the operation device 83.

Further, in the control method according to the present embodiment; when the machine body 10 (S5: Yes) starts automatically running, the electrostatic charge device 9 is so controlled as to start applying the voltage VH1 to the load 90 (S6). That is, the condition for starting applying the voltage VH1 to the load 90 includes starting of the automatic run of the machine body 10, and applying the voltage VH1 to the load 90 can be prohibited before the machine body 10 starts automatically running. Further, in the present embodiment; at least when the machine body 10 reaches the start position of the automatic run (automatic run start position Ps1) (S5: Yes), it is determined that the start of the automatic run of the machine body 10 is accomplished. Thus, applying the voltage VH1 to the load 90 can be more reliably prohibited before the machine body 10 starts automatically running.

In next step S8, the electrostatic charge process unit 74 of the control device 7 determines, based on the machine body 10's actuated state acquired by the acquisition process unit 71, whether or not the automatic run of the machine body 10 has been ended. At this time, when determining that the machine body 10's current position identified from the position information on the current position of the machine body 10 is present in the automatic run end position Pg1, the electrostatic charge process unit 74 determines that the automatic run has ended (S8: Yes), and moves the process to step S9. Meanwhile, when determining that the machine body 10's current position identified from the position information on the current position of the machine body 10 is not present in the automatic run end position Pg1, the electrostatic charge process unit 74 determines that the automatic run has not ended (S8: No), and repeats the process of step S8.

In step S9, the electrostatic charge process unit 74 of the control device 7 stops the actuation of the voltage application unit 92, and sets the state of applying the voltage VH1 to the load 90 (spray nozzle 41 and electrode 91) to the "non-actuated state" where no voltage VH1 is applied to the load 90. This puts the electrode 91 in the non-charge state; thus, the operator or the like can touch the electrode 91 in this state. In step S10, the output process unit 73 of the control device 7 causes the display 65 (display unit) to display the state of applying the voltage VH1 to the load 90. At this time, the state of applying the voltage VH1 to the load 90 is the "non-actuated state"; thus, the output process unit 73 causes the display 65 to show an "off display" showing that the electrostatic charge device 9 is off (stopped).

Thus, in the control method according to the present embodiment; after the machine body 10 ends automatically running (S8: Yes), the electrostatic charge device 9 is co controlled as to stop applying the voltage VH1 to the load 90 (S9). That is, the condition for stopping applying the voltage VH1 to the load 90 includes ending of the automatic run of the machine body 10, and applying the voltage VH1 to the load 90 can be continued during the machine body 10's continuing the automatic run.

Further, in the present embodiment; at least when the machine body 10 reaches the end position of the automatic run (automatic run end position Pg1) (S8: Yes), it is determined that end of the automatic run of the machine body 10 is accomplished. Thus, applying the voltage VH1 to the load 90 can be more reliably prohibited after the machine body 10 has ended the automatic run.

The control method according to the present embodiment further has presenting the state of applying the voltage VH1 to the load 90 (S3, S7, S10). This allows the operator and the like to be notified of the state of applying the voltage VH1 to the load 90, making it easier to prevent the operator and the like from inadvertently touching the electrode 91 which is in the charge state. In particular, according to the present embodiment, the state of applying the voltage VH1 to the load 90 is presented by being displayed on the display (display 65) in a mode visible from outside the machine body 10 (S3, S7, S10). That is, the state of applying the voltage VH1 to the load 90 is displayed, for example, on the display 65 placed on the upper face of the machine body 10, thereby to be displayed visible even from the surroundings of the spray machine 1 like in the spray machine 1's actuated state (run state, state of performing spray work, etc.). Thus, when the voltage VH1 is applied to the load 90, for example, preventing the operator or the like from inadvertently approaching the spray machine 1 makes it is easier to prevent the operator or the like from touching the electrode 91 which is in the charge state.

Step S10 ends the series of processes related to the electrostatic charge process. The control device 7 repeatedly executes the processes in step S1 to step S10. Thus, as long as the key switch is on (S1: Yes), the state of applying the voltage VH1 to the load 90 automatically changes according to the actuated state of the machine body 10.

### [6] Modified Examples

A description will hereinafter be made on modified examples of the first embodiment. The modified examples, which will be described below, can be applied in proper combination.

The control device 7 according to the present disclosure includes the computer system. The computer system has, as hardware, one or more processors and one or more storages. The processor, by executing the program recorded in the storage of the computer system, realizes the function as the control device 7 in the present disclosure. The program may be preliminarily recorded in the storage of the computer system, may be provided through an electric communication line, or may be provided in a manner to be recorded in a non-transitory recording medium, such as a memory card, an optical disk, a hard disk drive, or the like, each of which is readable by the computer system. Further, part of or all of the functional units included in the control device 7 may be composed of an electronic circuit.

Further, collecting at least part of the functions of the control device 7 in one housing is not an essential configuration for the control device 7; the components of the control device 7 may be provided in multiple housings in a distributed manner. Conversely, in the control device 7, functions that are distributed in multiple devices may be collected in a single housing. Further, at least part of the functions of the control device 7 may be realized by a cloud (cloud computing) or the like.

Not limited to for orchards such as vineyards or apple orchards, the spray machine 1 may also be used for works in other farm field F1 or work target area other than the farm field F1. Further, the spray matter sprayed by the spray machine 1 is not limited to the chemical solution, but can also be water, fertilizer, disinfectant solution or other liquids, or powders or the like, for example. Similarly, the spray targets to which the spray matter is sprayed are not limited to grape trees, but may also be other crops or objects other than crops (including an inorganic matter). Further, the spray machine 1 is not limited to an unmanned machine that is actuated by an automatic drive, but the spray machine 1 can also be configured to be actuated by an operation (including remote operation) of a human (operator) or can be a passenger type (manned machine) on which the operator can board, for example. In this case, too, the antenna 21 or the like is provided on the spray machine 1 so as to grasp the current position of the spray machine 1.

The voltage application unit 92 may be so configured as to apply a high voltage to between the spray nozzle 41 and the electrode 91, with the spray nozzle 41 as the positive (plus) pole and the electrode 91 as the negative (ground) pole. Further, it is sufficient that the potential difference (voltage) should be caused to between the spray nozzle 41 and the electrode 91; thus, the voltage application unit 92 may apply a negative voltage to the load 90 with the high potential side electrode (positive pole) as the ground and the low potential side electrode (negative pole) as the negative potential. That is, the voltage application unit 92 may set the spray nozzle 41 as ground and the electrode 91 as negative potential, or may set the spray nozzle 41 as negative potential and the electrode 91 as ground. Further, the electrode 91 may be omitted from the electrostatic charge device 9. In this case, the voltage application unit 92 is caused to between the spray nozzle 41 and a member, such as a frame, which is present around the spray nozzle 41.

Even during the automatic run of the machine body 10, the electrostatic charge process unit 74 may stop applying the voltage VH1 to the load 90 when the actuated state of the machine body 10 meets a certain condition, for example, when a person is present around the machine body 10.

Further, the electrostatic charge process unit 74 may change the state of applying the voltage VH1 to the load 90 not only according to the actuated state of the machine body 10, but also, for example, according to the operator or the like's operation on the user terminal 82 or operation device 83.

It is not essential that the state of applying the voltage VH1 to the load 90 should be switched collectively for the multiple spray nozzles 41; for example, the state of applying the voltage VH1 to the load 90 may be switched individually for each spray nozzle 41. In this case, even when the state of applying the voltage VH1 to the load 90 is the "actuated state" for part of the multiple spray nozzles 41, the state of applying the voltage VH1 to the load 90 can be the "non-actuated state" for the remaining spray nozzle 41.

Further, the state of applying the voltage VH1 to the load 90 may be switched according to the open and close state of each of the multiple spray nozzles 41. As an example, in the first spray pattern in which only the six spray nozzles 41 included in the first system U1 are sprayed, only the state of applying the voltage VH1 to the load 90 that corresponds to the spray nozzles 41 in the first system U1 can be the "actuated state", and the states of applying the voltage VH1 to the loads 90 that correspond to the spray nozzles 41 in the second and third systems U2, U3 are the "non-actuated state". The open and close state of the multiple spray nozzles 41 for each of the multiple systems U1, U2, U3 is identified, for example, by a "spray pattern" controlled by the control device 7 (spray process unit 75).

Further, the electrostatic charge process unit 74 may change the state of applying the voltage VH1 to the load 90, for example, by changing the magnitude of the voltage VH1. That is, for example, before the start of the automatic run of the machine body 10, the magnitude of the voltage VH1 may be reduced to such an extent as not to charge the spray matter, instead of the "non-actuated state" where applying the voltage VH1 to the load 90 is stopped. This, without stopping applying the voltage VH1 to the load 90, can realize a situation where even touching the electrode 91 causes no problem.

The presenting of the state of applying the voltage VH1 to the load 90 can be omitted as appropriate.

Further, it is sufficient that the support frame 3 should be mounted to one end portion of the machine body 10 in the front/back direction D3, and the support frame 3 may be mounted to the front of the machine body 10. In this case, the work unit (spray nozzle 41) supported to the support frame 3 is also placed on the front of the machine body 10, not on the rear thereof.

Further, the spray machine 1 may be provided with a pair of spray devices 4 arranged in the front/back direction D3. As a result, the spray machine 1 can perform the work (spray work) by each of the pair of spray devices 4 arranged in the front/back direction D3, making it possible to improve the work efficiency as compared with the case where the work is performed only by any one of the spray devices 4. The spray machine 1 may further include a rotating/driving device that generates rotary power to rotate the support frame 3 around the rotation axis Ax1 relative to the machine body 10.

Further, it is sufficient that the machine body 10 should have the first block 10L and the second block 10R arranged in the right and left direction D2, and right and left of the first block 10L and the second block 10R may be reversed. That is, it may be so configured that the first block 10L on which the power source 63 and the like are provided is positioned on the right side, while the second block 10R on which the user interface 61 and the like are provided is positioned on the left side.

Further, the run unit 11 is not limited to the crawler-type run device, but may have one or a multiplicity of wheels and be so configured as to run by rotation of the wheels, for example. Further, the run unit 11 is not limited to be so configured as to be driven by the hydraulic motor, but may also be so configured as to be driven by an electric motor, for example.

Further, the spray machine 1 is not limited to of the air-assist type spray machine as in the first embodiment, but may also be of an electrostatic spraying type, or of a type combining the air-assist type with the electrostatic spraying type. In the case of the electrostatic spraying type spray machine 1, the airflow generation unit 5 can be omitted.

Further, the power source 63, not limited to the engine, may have a motor (electric motor), for example, or may be a hybrid power source including the engine and the motor.

Further, the spray machine 1 may be in such a mode that the machine body 10 does not have the gate-shape, but the entire machine body 10 runs between the pair of adjacent crop rows Vr1 (work route). In this case, the spray machine 1 runs on each work route without straddling the crop row Vr1. In this case, the spray device 4 performs the spray work by switching among a spray pattern in which the chemical solution is sprayed to both in the right and left directions D2, a spray pattern in which the chemical solution is sprayed only to the left, and a spray pattern in which the chemical solution is sprayed only to the right.

Further, the antennas 21, 22 are not limited to the position identifying antennas, but may be wireless communication antennas, for example. Further, the antennas 21 and 22 are not limited to those for receiving, but may be those for sending or for receiving and sending.

Further, the user interface 61, in addition to or instead of the display unit 611, may have means for presenting information to the user by sound output or the like, for example. Further, at least one of the adjustment items (flow rate or pressure and the like) may be automatically adjusted by the control device 7 by using the operation unit 612 of the user interface 61. In this case, the operation unit 612 can be omitted as appropriate, and the user interface 61 may only display the adjustment results on the display unit 611.

### (Appendices to Invention)

### REFERENCE SIGNS LIST

1 spray machine
9 electrostatic charge device
10 machine body
41 spray nozzle
90 load
91 electrode
71 acquisition process unit
74 electrostatic charge process unit
65 display (display unit)
83 operation unit
821 display unit
Ps1 (automatic run) start position
R0 target route
VH1 voltage

## Claims

1. A method of controlling a spray machine (1) provided with a machine body (10) capable of running, a spray nozzle (41) that is supported to the machine body (10) and sprays a liquid spray matter, and an electrostatic charge device (9) that applies a voltage to a load (90), which includes an electrode (91), thereby to charge the spray matter sprayed from the spray nozzle (41), the method comprising:
acquiring an actuated state of the machine body (10); and
controlling, according to the actuated state of the machine body (10), the electrostatic charge device (9) in a manner to change a state of applying the voltage to the load (90), **characterized in that**
the actuated state of the machine body (10) includes information at least one of operational signal from an operation device (83) and position information on a current position of the machine body (10).

2. The method of controlling the spray machine (1) as claimed in claim 1, further comprising:
spraying the spray matter from the spray nozzle (41) while causing the machine body (10) to automatically run along a target route.

3. The method of controlling the spray machine (1) as claimed in claim 2, wherein
after the operation device (83) ends an operation for controlling the machine body (10), the electrostatic charge device (9) is so controlled as to start applying the voltage to the load (90).

4. The method of controlling the spray machine (1) as claimed in claim 2 or 3, wherein
when the machine body (10) starts automatically running, the electrostatic charge device (9) is so controlled as to start applying the voltage to the load (90).

5. The method of controlling the spray machine (1) as claimed in claim 4, wherein
at least when the machine body (10) reaches a start position of the automatic run, start of the automatic run of the machine body (10) is determined to be accomplished.

6. The method of controlling the spray machine (1) as claimed in claim 2 or 3, wherein
after the machine body (10) ends automatically running, the electrostatic charge device (9) is so controlled as to stop applying the voltage to the load (90).

7. The method of controlling the spray machine (1) as claimed in any one of claims 1 to 3, further comprising:
presenting the state of applying the voltage to the load (90).

8. The method of controlling the spray machine (1) as claimed in claim 7, wherein
the state of applying the voltage to the load (90) is presented by being displayed on a display in a mode visible from outside the machine body (10).

9. A spray machine control program for causing one or more processors to execute the control method of the spray machine (1) claimed in any one of claims 1 to 3.

10. A spray machine (1) comprising:
a machine body (10) capable of running;
a spray nozzle (41) that is supported to the machine body (10) and sprays a liquid spray matter;
an electrostatic charge device (9) that applies a voltage to a load (90), which includes an electrode(91), thereby to charge the spray matter sprayed from the spray nozzle (41);
an acquisition process unit (71) that acquires an actuated state of the machine body (10); and
an electrostatic charge process unit (74) that, according to the actuated state of the machine body (10), controls the electrostatic charge device (9) in a manner to change a state of applying the voltage to the load (90), **characterized in that**
the actuated state of the machine body (10) includes information at least one of operational signal from an operation device (83) and position information on a current position of the machine body (10).

## Patentansprüche

1. Verfahren zum Steuern einer Sprühmaschine (1), die versehen ist mit einem Maschinenkörper (10), der in der Lage ist, sich fortzubewegen, einer Sprühdüse (41), die an dem Maschinenkörper (10) gehalten wird und eine flüssige Sprühmaterie sprüht, und einer elektrostatischen Aufladevorrichtung (9), die eine Spannung auf eine Last (90) anwendet, die eine Elektrode (91) beinhaltet, wodurch die von der Sprühdüse (41) gesprühte Sprühmaterie aufgeladen wird, das Verfahren umfassend:
Erfassen eines betätigten Zustands des Maschinenkörpers (10); und
Steuern, gemäß des betätigten Zustands des Maschinenkörpers (10), der elektrostatischen Aufladevorrichtung (9) auf eine Weise, dass ein Zustand des Anwendens der Spannung auf die Last (90) geändert wird, **gekennzeichnet dadurch, dass**
der betätigte Zustand des Maschinenkörpers (10) Informationen von mindestens einem von einem Betriebssignal von einer Betriebsvorrichtung (83) und Positionsinformationen über eine aktuelle Position des Maschinenkörpers (10) beinhaltet.

2. Verfahren zum Steuern der Sprühmaschine (1) wie in Anspruch 1 beansprucht, ferner umfassend:
Sprühen der Sprühmaterie aus der Sprühdüse (41), während veranlasst wird, dass sich der Maschinenkörper (10) automatisch entlang einer Zielroute fortbewegt.

3. Verfahren zum Steuern der Sprühmaschine (1) wie in Anspruch 2 beansprucht, wobei
nachdem die Betriebsvorrichtung (83) einen Betrieb zum Steuern des Maschinenkörpers (10) beendet, die elektrostatische Aufladevorrichtung (9) so gesteuert wird, dass das Anwenden der Spannung auf die Last (90) gestartet wird.

4. Verfahren zum Steuern der Sprühmaschine (1) wie in Anspruch 2 oder 3 beansprucht, wobei
wenn der Maschinenkörper (10) das automatische Fortbewegen startet, die elektrostatische Aufladevorrichtung (9) so gesteuert wird, dass das Anwenden der Spannung auf die Last (90) gestartet wird.

5. Verfahren zum Steuern der Sprühmaschine (1) wie in Anspruch 4 beansprucht, wobei
mindestens wenn der Maschinenkörper (10) eine Startposition der automatischen Fortbewegung erreicht, bestimmt wird, dass der Start der automatischen Fortbewegung des Maschinenkörpers (10) durchgeführt werden soll.

6. Verfahren zum Steuern der Sprühmaschine (1) wie in Anspruch 2 oder 3 beansprucht, wobei
nachdem der Maschinenkörper (10) das automatische Fortbewegen beendet, die elektrostatische Aufladevorrichtung (9) so gesteuert wird, dass das Anwenden der Spannung auf die Last (90) gestoppt wird.

7. Verfahren zum Steuern der Sprühmaschine (1) wie in einem der Ansprüche 1 bis 3 beansprucht, ferner umfassend:
Darstellen des Zustands des Anwendens der Spannung auf die Last (90).

8. Verfahren zum Steuern der Sprühmaschine (1) wie in Anspruch 7 beansprucht, wobei
der Zustand des Anwendens der Spannung auf die Last (90) dargestellt wird, indem er auf einer Anzeige in einem Modus angezeigt wird, der von außerhalb des Maschinenkörpers (10) sichtbar ist.

9. Sprühmaschinensteuerprogramm zum Veranlassen eines oder mehrerer Prozessoren, das Steuerverfahren der Sprühmaschine (1) wie in einem der Ansprüche 1 bis 3 beansprucht auszuführen.

10. Sprühmaschine (1), umfassend:
einen Maschinenkörper (10), der in der Lage ist, sich fortzubewegen;
eine Sprühdüse (41), die an dem Maschinenkörper (10) gehalten wird und eine flüssige Sprühmaterie sprüht;
eine elektrostatische Aufladevorrichtung (9), die eine Spannung auf eine Last (90) anwendet, die eine Elektrode (91) beinhaltet, wodurch die aus der Sprühdüse (41) gesprühte Sprühmaterie aufgeladen wird;
eine Erfassungsprozesseinheit (71), die einen betätigten Zustand des Maschinenkörpers (10) erfasst; und
eine elektrostatische Aufladeprozesseinheit (74), die gemäß des betätigten Zustands des Maschinenkörpers (10), die elektrostatische Aufladevorrichtung (9) auf eine Weise steuert, dass ein Zustand des Anwendens der Spannung auf die Last (90) geändert wird, **gekennzeichnet dadurch, dass**
der betätigte Zustand des Maschinenkörpers (10) Informationen von mindestens einem von einem Betriebssignal von einer Betriebsvorrichtung (83) und Positionsinformationen über eine aktuelle Position des Maschinenkörpers (10) beinhaltet.

## Revendications

1. Procédé de commande d'une machine de pulvérisation (1) fournie avec un corps de machine (10) capable de fonctionner, une buse de pulvérisation (41) qui est supportée sur le corps de machine (10) et qui pulvérise une matière de pulvérisation liquide, et un dispositif de charge électrostatique (9) qui applique une tension à une charge (90), qui inclut une électrode (91), pour charger ainsi la matière de pulvérisation pulvérisée depuis la buse de pulvérisation (41), le procédé comprenant :
l'acquisition d'un état actionné du corps de machine (10) ; et
la commande, selon l'état actionné du corps de machine (10), du dispositif de charge électrostatique (9) d'une manière à changer un état d'application de la tension à la charge (90), **caractérisé en ce que**
l'état actionné du corps de machine (10) inclut des informations liées à au moins l'un d'un signal opérationnel d'un dispositif d'actionnement (83) et d'informations de position sur une position actuelle du corps de machine (10).

2. Procédé de commande de la machine de pulvérisation (1) selon la revendication 1, comprenant en outre :
la pulvérisation de la matière de pulvérisation depuis la buse de pulvérisation (41) tout en amenant le corps de machine (10) à fonctionner automatiquement le long d'un itinéraire cible.

3. Procédé de commande de la machine de pulvérisation (1) selon la revendication 2, dans lequel
après que le dispositif d'actionnement (83) termine une action pour commander le corps de machine (10), le dispositif de charge électrostatique (9) est commandé de manière à commencer l'application de la tension à la charge (90).

4. Procédé de commande de la machine de pulvérisation (1) selon la revendication 2 ou 3, dans lequel
lorsque le corps de machine (10) commence à fonctionner automatiquement, le dispositif de charge électrostatique (9) est commandé de manière à commencer l'application de la tension à la charge (90).

5. Procédé de commande de la machine de pulvérisation (1) selon la revendication 4, dans lequel
au moins lorsque le corps de machine (10) atteint une position de commencement du fonctionnement automatique, le commencement du fonctionnement automatique du corps de machine (10) est déterminé comme étant accompli.

6. Procédé de commande de la machine de pulvérisation (1) selon la revendication 2 ou 3, dans lequel
après que le corps de machine (10) termine de fonctionner automatiquement, le dispositif de charge électrostatique (9) est commandé de manière à arrêter l'application de la tension à la charge (90).

7. Procédé de commande de la machine de pulvérisation (1) selon l'une quelconque des revendications 1 à 3, comprenant en outre :
la présentation de l'état d'application de la tension à la charge (90).

8. Procédé de commande de la machine de pulvérisation (1) selon la revendication 7, dans lequel
l'état d'application de la tension à la charge (90) est présenté en étant affiché sur un affichage dans un mode visible depuis l'extérieur du corps de machine (10).

9. Programme de commande de machine de pulvérisation pour amener un ou plusieurs processeurs à exécuter le procédé de commande de la machine de pulvérisation (1) selon l'une quelconque des revendications 1 à 3.

10. Machine de pulvérisation (1) comprenant :
un corps de machine (10) capable de fonctionner ;
une buse de pulvérisation (41) qui est supportée sur le corps de machine (10) et qui pulvérise une matière de pulvérisation liquide ;
un dispositif de charge électrostatique (9) qui applique une tension à une charge (90), qui inclut une électrode (91), pour charger ainsi la matière de pulvérisation pulvérisée depuis la buse de pulvérisation (41) ;
une unité de traitement d'acquisition (71) qui acquiert un état actionné du corps de machine (10) ; et
une unité de traitement de charge électrostatique (74) qui, selon l'état actionné du corps de machine (10), commande le dispositif de charge électrostatique (9) d'une manière à changer un état d'application de la tension à la charge (90), **caractérisée en ce que**
l'état actionné du corps de machine (10) inclut des informations liées à au moins l'un d'un signal opérationnel d'un dispositif d'actionnement (83) et d'informations de position sur une position actuelle du corps de machine (10).
